Europäisches Patentamt

European Patent Office

Office européen des brevets

(19)

(11) Publication number: **0 162 478**

**A2**

(12) **EUROPEAN PATENT APPLICATION**

(21) Application number: **85106459.2**

(22) Date of filing: **24.05.85**

(51) Int. Cl.⁴: **H 04 L 1/18**

(30) Priority: **25.05.84 US 614283**

(43) Date of publication of application:
**27.11.85 Bulletin 85/48**

(84) Designated Contracting States:
**AT BE CH DE FR GB IT LI LU NL SE**

(71) Applicant: **NTX COMMUNICATIONS CORPORATION**
**4251 Burton Drive**
**Santa Clara California 95054(US)**

(72) Inventor: **Wilson, Jon C.**
**200 No. Maryland Avenue No. 301**
**Glendale, Cal. 91206-4236(US)**

(72) Inventor: **Shick, David A.**
**27366 Compostela**
**Mission Viejo, Cal. 92692(US)**

(72) Inventor: **Haynie, Robert L.**
**16181 Jasmine Way**
**Los Gatos, Cal. 95030(US)**

(72) Inventor: **Wilder, Donald R.**
**4251 Burton Drive**
**Santa Clara, Cal. 95054(US)**

(72) Inventor: **Zimmerman, Larry D.**
**4504 Poinsettia**
**San Jose, Cal. 95136(US)**

(72) Inventor: **Le Cour, Richard M.**
**225 Massol Avenue**
**Los Gatos, Cal. 95030(US)**

(72) Inventor: **Guzy, D. James**
**1340 kArbor Road**
**Menlo Park, Cal. 94025(US)**

(74) Representative: **Reinländer & Bernhardt Patentanwälte**
**Orthstrasse 12**
**D-8000 München 60(DE)**

(54) **Method and apparatus for high speed satellite communication.**

(57) A satelitte communications system wherein sequentially numbered frames of data are transmitted between a two stations, and further wherein each station returns and acknowledgement of frames successfully received and rejection of frames not received. Means are provided which permit a multiplicity of frames to be selectively rejected by a station, wherein the multiplicity of selectively rejected frames can all be outstanding an any given time.

./...

FIGURE 1.

<u>Description</u>

<u>Method And Apparatus For High Speed</u>
<u>Satellite Communication</u>

<u>Technical Field</u>

The present invention is generally directed to electronic communication systems and methods and, more particularly, to optimizing the efficiency with which a satellite communications link is utilized.

<u>Background Art</u>

In a typical satellite communications system, and other long distance communications systems, data is passed back and forth over a transmission link between stations that are separated by large physical distances. The efficiency with which data is passed across the link is influenced by several factors including: propagation delay, bit error rate, protocol, and frame size.

Where the transmission link is a satellite, the data is received by the satellite from the transmitting station and relayed by the satellite to the receiving station. The amount of time it takes for the data to travel up to the satellite and back down to the receiving station is called the propagation delay time and is typically very long. For geosynchronous satellites positioned 22,282 miles above the equator, the data must travel over a distance in excess of 44,000 miles before it reaches the receiving station.

Propagation Delay:

When the speed of light, 186,000 miles per second, is taken into consideration, an up and down propagation delay time of 239.6 milliseconds is typically experienced by earth stations broadcasting and receiving from points along the equator. As earth stations are placed further away from the equator, the propagation delay time is increased. For earth stations placed at the maximum usable lattitude, the distance to the relaying satellite is 25,946 miles and corresponds to an up and down propagation time of 279.0 milliseconds.

In the early satellite link systems, a binary synchronous communication (BSC) data link protocol was utilized. This signifies that a three-step transmission process is used: 1) the intended data is first transmitted to the receiving station; 2) the receiving station then sends back an acknowledgment of proper receipt of the transmitted data; and 3) the transmitter must wait for the acknowledgment before sending the next message.

For a nominal satellite distance of 25,000 miles, a propagation delay time of 270 milliseconds will result. The round trip delay for a message and its acknowledgment is twice the one way delay, or 540 milliseconds (2 * 270 Milliseconds).

For computer centers connected to earth stations via terrestrial lines, the delay contributed by these terrestrial "tails" must also be included in the overall delay. Delays contributed by terrestrial "tails" are typically in the range of 100 to 200 milliseconds, total.

A nominal value for round trip delay of a satellite link with terrestrial tails is 700 milliseconds and will be used in the following discussions.

Bit Error Rates:

Also a significant factor in the quality of a communications link is the bit error rate for the link.

The typical design value for the bit error rate of a satellite channel is $1*10^{-7}$. Worst-case bit error rates for a satellite channel with adverse weather conditions range from $1*10^{-4}$ to $1*10^{-5}$. Bit error rates, which characterize operation under normal conditions ($1*10^{-7}$) and under adverse conditions ($1*10^{-4}$), will be used to analyze the efficiency of the prior satellite communcations systems.

Communication Protocols:

Communication protocols are used to structure the format of messages on a communications link in order to assure that all messages that are transmitted are correctly received in sequence and passed to the proper destination. Modern communications links are fast, expensive to use, and subject to errors. Existing protocols, as will now be described, are unable to take advantage of the speed of the modern communications link.

In recent years communications protocols that are based upon a layered network architecture and are insensitive to data characters in a message have gained acceptance. The Synchronous Data Link Control (SDLC) originated by International Business Machines Corporation (IBM) and the Extended SDLC are examples of this type of protocol which are in current use.

The interchange of information between stations on an SDLC or Extended SDLC link is controlled by sequence numbers. The two types of sequence numbers are: Send Sequence Number, $N_S$, and Receive Sequence Number, $N_R$. The $N_S$ indicates to the receiving host the sequence number of the next frame that will be transmitted by the sending host. As each frame is sent, the sending host increments the $N_S$ that it sends by 1. $N_R$ is used to acknowledge which frames have been received, and to indicate to the sending host which information frame the receiving host expects to receive next. In SDLC and Extended SDLC N(R) always acknowledges that all frames up to N(R) have been received.

SDLC uses 3-bit sequence numbers that may contain the digits 0 through 7. SDLC allows for up to 7 frames to be outstanding (frame transmitted but not acknowledged). Extended SDLC could allow for 3-bit and, in extended mode, 7-bit sequence numbers which may contain the digits 0 through 7 and 0 through 127, respectively. Extended SDLC would allow for up to 127 frames to be outstanding. The two protocols use similar error detection algorithms and error recovery techniques.

Upon detection of a missing frame, or a frame in error, both SDLC and Extended SDLC use a technique that is called "Go-back-n". Use of this technique requires the receiving host to reject all frames that have been received after the frame in error.

As an example, suppose the sending host has sent frames numbered 1, 2, 3, 4 and 5 and that frame number 2 was destroyed in transit. The receiving host using the SDLC/Extended SDLC technique, will reject frame number 2 and discard frames numbered 3, 4, and 5. The sending host then must retransmit these frames. In this example it's easy to see that retransmission of frames 3, 4, and 5 is redundant and should not be required.

Frame Size Considerations:

Frame size considerations, in data communications, are similar to the considerations involved in picking the proper record size for other forms of input/output processing with two striking differences.

As with "conventional" data processing input and output operations, when the frame size is increased, the overhead (in terms of protocol characters and I/O initiation/termination activities) is decreased (when measured in terms of overhead per message character).

In data communications, however, larger frames have an increased probability of being "hit" with a link error and, therefore, run a higher risk of having to be retransmitted. Error rates are expressed in terms of the number of bits that can be transmitted before an error occurs. Typical error rates for high speed terrestrial and satellite circuits lie in the range of one error per $10^4$ bits to one error in $10^7$ bits. An error rate of one in $10^4$ bits would, on the average, hit every frame sent if a frame size of 10,000 bits (1250 bytes) were selected. In this example, no data communications traffic could occur.

Another difference between "conventional" data processing and data communications relates to frame storage considerations. Copies of transmitted frames are required to be saved until they have been acknowledged by the receiving host. As an example, a single link using 1,000 byte frames would require 7,000 bytes in an SDLC implemention and 127,000 bytes in an extended SDLC implemention. (7 outstanding messages x 1,000 bytes/message for SDLC and 127 outstanding messages x 1,000 bytes/message for Extended SDLC).

When these protocols are implemented on conventional communications processors, serving a wide range of uses and a large number of communications lines, the storage required to save copies of transmitted frames becomes a burden and care must be taken to balance the response time needs of all users with the requirement to run high speed links at optimum efficiency.

Disclosure Of Invention

These and other problems of prior art communication systems are overcome by the present invention of an improved communications method and apparatus of the type including first and second receiving and transmitting means which transmit and receive sequentially numbered frames of information, a

0162478

signal transmission link means for communicating the information between the first and second transmitting and receiving means, and host means connected to the first and second transmitting and receiving means, for providing data for transmission across the transmission link and for receiving data transmitted across the transmission link. Each transmitting and receiving means include means for evaluating the transmssions received from the transmission link and for inserting status information into subsequently transmitted frames to indicate whether previously transmitted frames were successfully received. The first and second transmitting and receiving means further include means responsive to the status information for controlling subsequent transmission of frames of information to the other. The improvement comprises data flow processing means for controlling the flow of information between each transmitting and receiving means and its associated host processor means. The data flow processing means include selective reject means coupled to the evaluating means for controlling the transmitting and receiving means to send a selective reject command to the other transmitting and receiving means which command identifies each frame that has not been successfully received from said other transmitting and receiving means, but without implying that all prior frames have been successfully received, so that a multiplicity of rejected frames can be identified for retransmission across the transmission link at any point in time. The data flow processor means also include means responsive to the number of selectively rejected commands outstanding for controlling the transmitting and receiving means to transmit a reject command to said other when the number of missing frames exceed a threshold number.

Also in accordance with the present invention, the health of the communications system is monitored by each of the data flow processor means by way of a timing means, wherein the amount of time required for the other transmitting and receiving means to respond to a selective reject command is timed and further wherein, in the event the response time exceeds the predetermined value, the selective reject command is retransmitted. During periods of inactivity across the transmission link, heart beat means periodically transmit a status block of information to keep the other transmitting and receiving stations informed of status information for the transmission link.

In the preferred embodiment of the present invention, the information transmitted across the transmission link is organized into frames, wherein each frame includes at least a control field. The control field includes an indication of the type of information provided by the frame, and/or parameter and status information relating to the condition of the information being passed back and forth between the first and second transmitting and receiving means.

Included in the parameter and status information are the sequence number of the frame being sent by the transmitting station, and the sequence number, plus 1, of the last frame successfully received by the transmitting station from the other station.

Also defined in the parameter and sequence information is the maximum sequence length of the frame sequences being transmitted back and forth between the these two stations. This permits the maximum sequence length to be specified in accordance with the length and condition of the link so as to optimize utilization of the link.

Also included are command designations which indicate whether an identified frame sequence number corresponds to a rejected or selectively rejected frame. In one embodiment of the present invention, sequence numbers are provided in the control field in a selective reject command frame which define a range of sequence numbers which are being selectively rejected. Thus, where a plurality of frames are lost at one time a selective reject command frame need not be sent for each of the selectively rejected frames. The ranges can be defined by the fields that normally define the last frame sent and the last frame, plus one, received. Alternatively, the range can be sent in addition to these last-received and last-sent frame sequence numbers.

In a satellite communication system constructed in accordance with the present invention, a single frame can be selectively rejected without the requirement of retransmission of frames which follow the rejected frame, which subsequent frames are already in the transmission channel. Moreover, even when a frame is selectively rejected, the transmitting and receiving and means can continue to transmit frames after retransmission of the selectively rejected frame without having to wait for an acknowledgment of the retransmitted selectively rejected frame.

A reject command is issued in accordance with the present invention when a gap in the received sequence numbers is found which exceeds a specified threshold value. When a reject command is issued, a "Go-back-n" condition is provided starting from the designated sequence number.

It is therefore an object of the present invention to provide an improved satellite communication system which maximizes the utilization of a satellite transmission link.

It is another object of the present invention to provide an improved satellite communication system and method wherein a multiplicity of selectively rejected frames can be outstanding.

It is a further object of the present invention to provide an improved satellite communication method and apparatus wherein the transmission of a selective reject command does not implicitly indicate that all frames having sequence numbers less than the selectively rejected frame have been successfully received.

It is still another object of the present invention to provide an improved satellite communication method and apparatus wherein a selective reject command can indicate a range of frames which are being selectively rejected.

It is a still further object of the present invention to provide an improved satellite communication method and apparatus wherein the health of the transmission link is monitored by way of detecting the absence of an anticipated response after a selected time period.

It is a further object of the present invention to provide an improved satellite communication method and apparatus wherein the length of the frame sequence is selectable by the user.

It is still another object of the present invention to provide an improved satellite communication system wherein a "go-back-n" condition is invoked only when a hole is found which exceeds a predetermined threshold value.

It is another object of the present invention to provide an improved satellite communication method and apparatus wherein each transmitting and receiving station maintains a transmitted and received frame record, and further wherein the record includes an indication of frames which have been selectively rejected, and further includes means for monitoring the number of selectively rejected frames.

These and other objectives, features and advantages of the present invention will be more readily understood upon consideration of the following detailed description of certain preferred embodiments of the present invention taken in conjunction with the accompanying drawings.

Brief Description Of The Drawings

Fig. 1 is a simplified illustration of a satellite communications system in accordance with the present invention.

Figs. 2A through 2C illustrate data transmission across a satellite link in accordance with a SDLC data transfer method.

Figs. 3A-3B illustrate data transmission across a satellite link in accordance with a Extended SDLC data transfer method.

Fig. 3C illustrates data transmission across a satellite link in accordance with the present invention.

Fig. 4 is a conceptual block diagram of the functional elements of the data flow processor in accordance with the present invention.

Figs. 5A and 5B illustrate the send/receive frame table maintained in accordance with the present invention.

Fig. 6 provides a generalized flow diagram of read processing function.

Fig. 7 provides a detailed flow diagram of FRMARRI step 128 of Fig. 6.

Fig. 8 provides a detailed flow diagram of FRMPIKR step 142 of Fig. 7.

Fig. 9 provides a detailed flow diagram of RNGCHK step 148 of Fig. 7.

Fig. 10 provides a detailed flow diagram of ACKWIND step 184 of Fig. 9

Fig. 11 provides a detailed flow diagram of HART step 188 of Fig. 9.

Figs. 12A and 12B provide a detailed flow diagram of ITSTATE step 154 of Fig. 7.

Fig. 13 provides a generalized flow diagram of the write processing function in accordance with the present invention.

Fig. 14 provides a detailed flow diagram of DOHART step 268 of Fig. 13.

Fig. 15 provides a detailed flow diagram of GETFRM step 270 of Fig. 13.

Fig. 16 provides a detailed flow diagram of BILDFEA step 308 of Fig. 13.

Fig. 17 provides a detailed flow diagram of MOVEFRM step 342 of Fig. 13.

Fig. 18 illustrates the frame format in accordance with one embodiment of the present invention.

Fig. 19 illustrates an asymmetrical link.


Best Mode Of The Invention

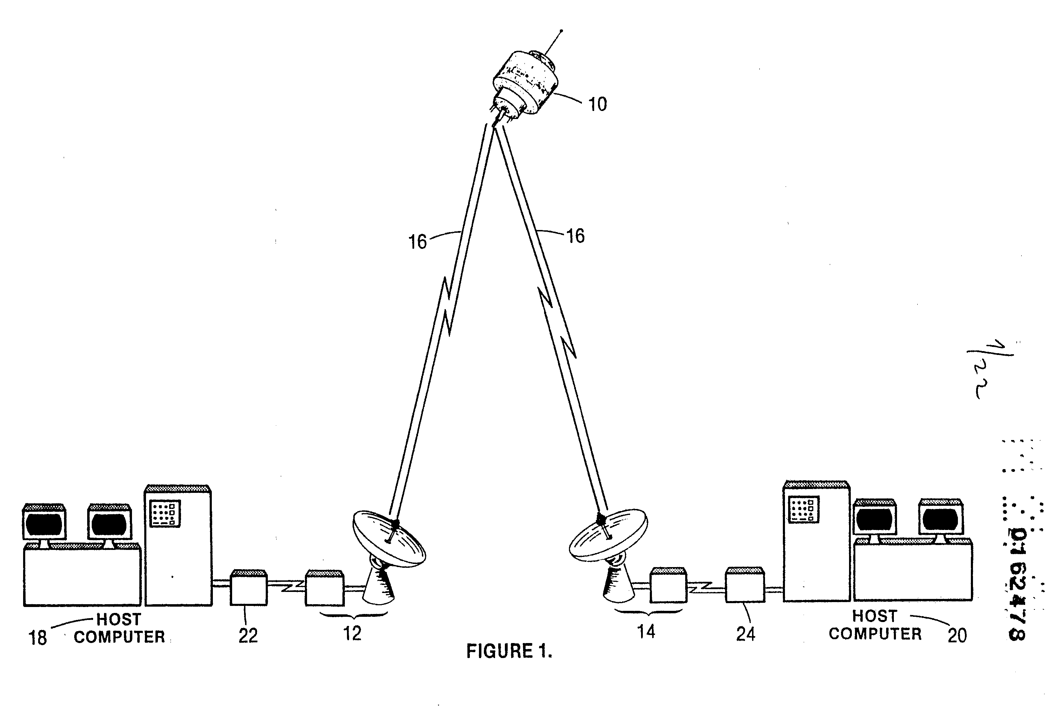

Referring to Fig. 1, a satellite 10 relays information between physically separated stations 12 and 14 across a transmission link 16. Each transmitting/receiving station 12 and 14 receives information for transmission from a host 18 and 20, respectively. Additionally, each transmitting/receiving station 12 and 14 passes information that it has received from the transmission link to its host. In accordance with the present invention, there is provided a data flow processor 22 coupled between receiver/transmitter 12 and host 18, and a data flow processor 24 coupled between transmitter/receiver 14 and host 20. These data flow processors can be distinct pieces of hardware or can be implemented within the hosts in the form of a series of instructions executed by the host for processing the incoming and outgoing frames of information.

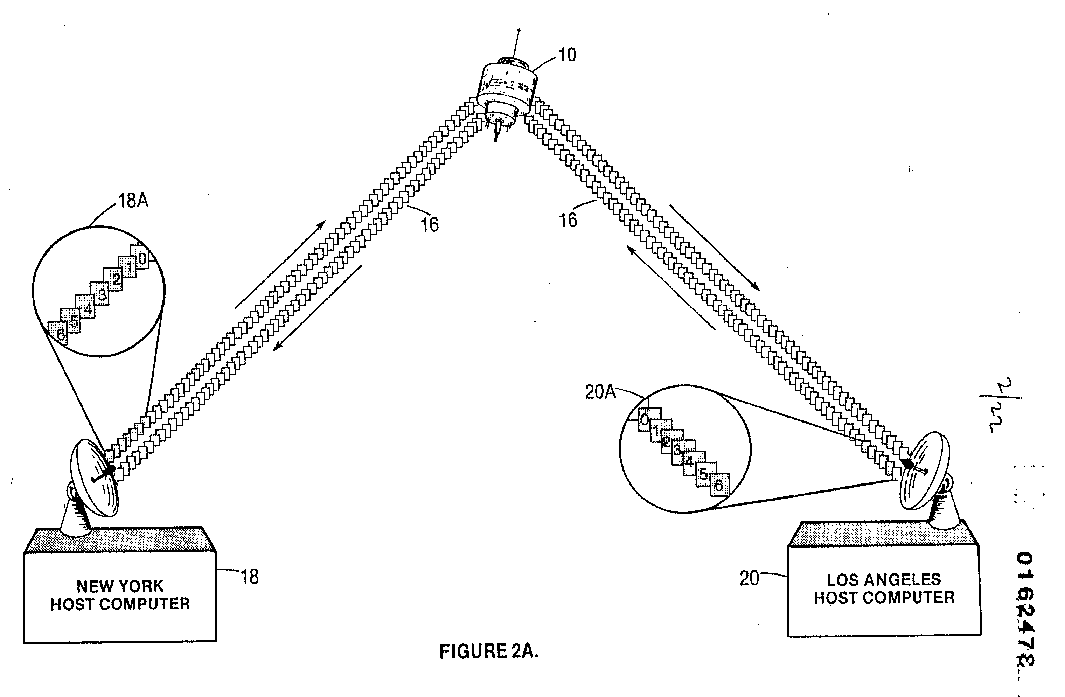

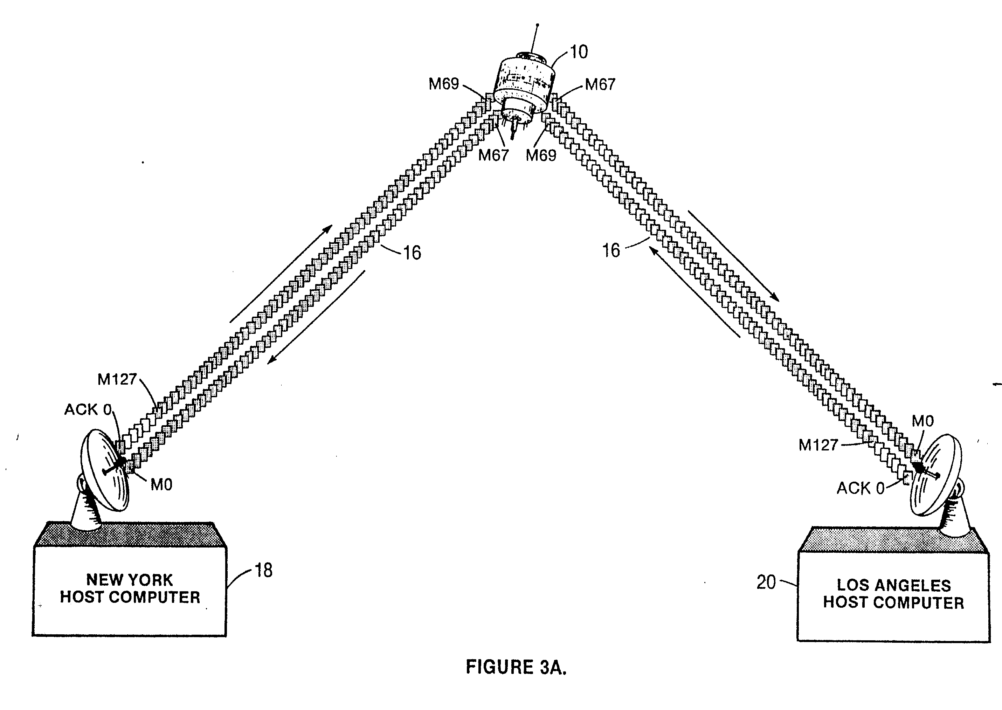

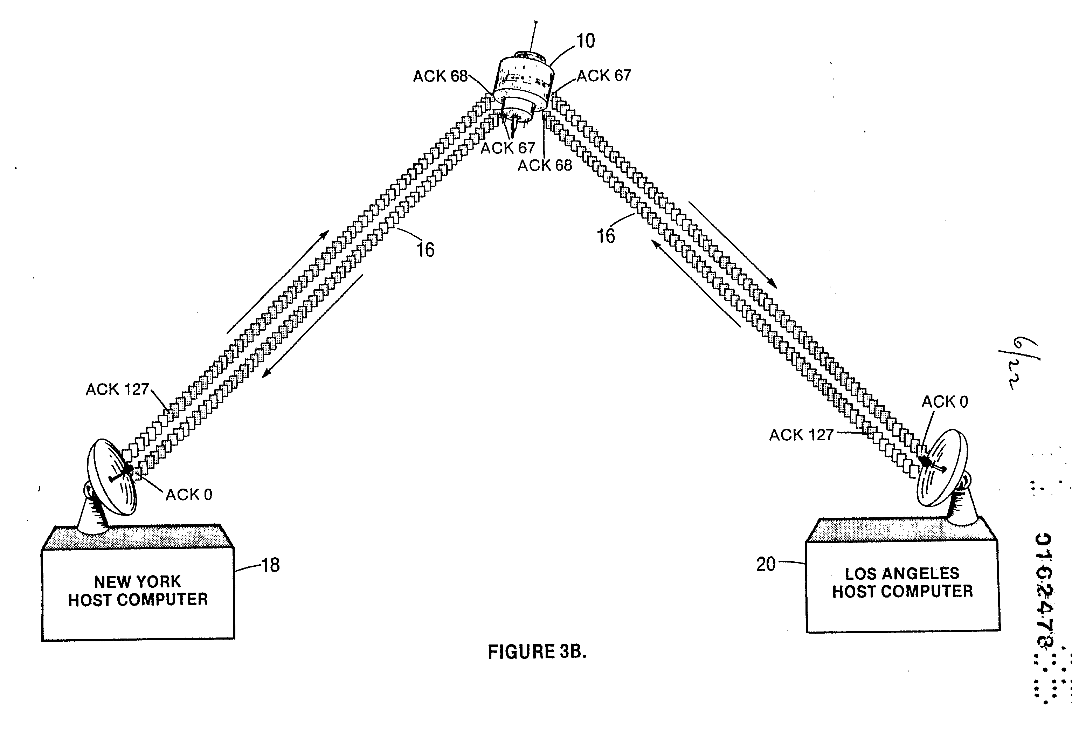

Referring to Figs. 2A through 2C, and 3A through 3B, the distinctions between prior art methods for transmitting information over a satellite link and that of the present invention, are illustrated. In the following protocol examples, a one-hop 1.544 million bit/second satellite circuit with a round trip propagation delay of .7 seconds is assumed. Operation under optimum conditions (error rate of $1*10^{-7}$) and adverse conditions (error rate of $1*10^{-4}$) are shown with an arbitrary frame size of 500 bytes (4,000 bits).

A conceptual diagram of the link is shown in Fig. 2A. Notice that each path of the link from the New York host computer 18 to the Los Angeles host computer 20 is divided into 135 equal sized segments. These represent the total data capacity of the link at any one time in terms of 500 byte frames. That is, if New York was continually transmitting frames to Los Angeles, the link would contain approximately 67,500 bytes of information (135-500 byte frames) at any one time.

Remember that the one way propagation delay is .35 seconds on the satellite circuit and the speed is 1.544 million bits (193,000 bytes) per second. In .35 seconds then, the link has the potential of containing .35*193,000 characters. In a similar fashion, the line drawn representing the Los Angeles to New York link is divided into 135 slots and has an identical capacity.

Fig. 2A assumes an SDLC protocol with an optimum error rate of $1*10^{-7}$. At this time, the New York host has transmitted seven frames 18A to Los Angeles and Los Angeles has sent the same number 20A to New York. It has only taken .02 seconds to place these frames on the link (7 Frames x 500 Bytes per Frame/193,000 Bytes per Second) but now both stations must wait for acknowledgments as SDLC limits them to seven outstanding frames.

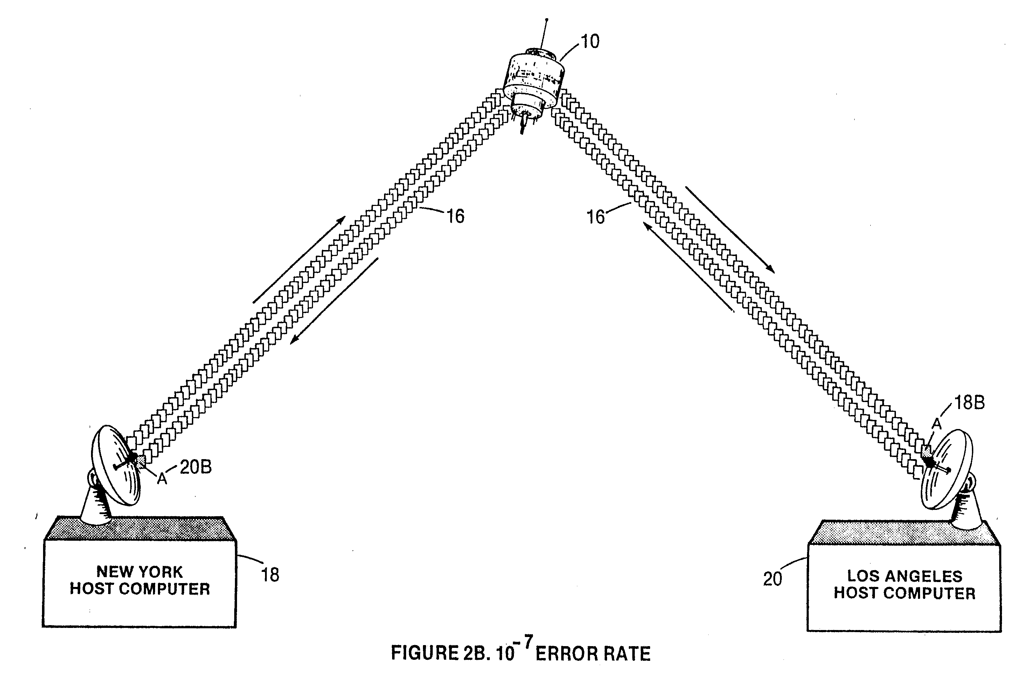

Fig. 2B shows the acknowledgments 18B and 20B (for the messages sent in Fig. 2A) finally being received by the sending host. Notice that both directions are nearly idle with only the acknowledgment traffic being passed at this time. Due to propagation delays, .7 seconds have elapsed between the time both hosts sent their first message and the time they received the acknowledgment and were allowed to send another message. The capacity of each link direction is over 135,000 bytes (.7 seconds x 193,000 bytes/second) and yet each host managed to pass only 3,500 bytes (7 frames) during this time. Link utilization (3,500 bytes/135,000 bytes) is 2.6% using SDLC.

The pattern of utiliization illustrated above continues until a link event occurs to cause a frame to be destroyed. At an error rate of $1 * 10^{-7}$, this would, on the average, occur every three hours given the data transmission capabilities described above and would have only minimal impact on the already low utilization demonstrated by SDLC.

The pattern of utilization when the link degrades to an error rate of $1 * 10^{-4}$ is of interest because it demonstrates the inefficiency of the "Go-back-n" technique and the resulting utilization is the same for SDLC and Extended SDLC. In this case, the transmission of seven messages by both hosts is also illustrated by Fig. 2A. However, the error rate now dictates that there will be, on the average, an error every 10,000 bits. This would cause every third frame sent to be rejected by the receiver.

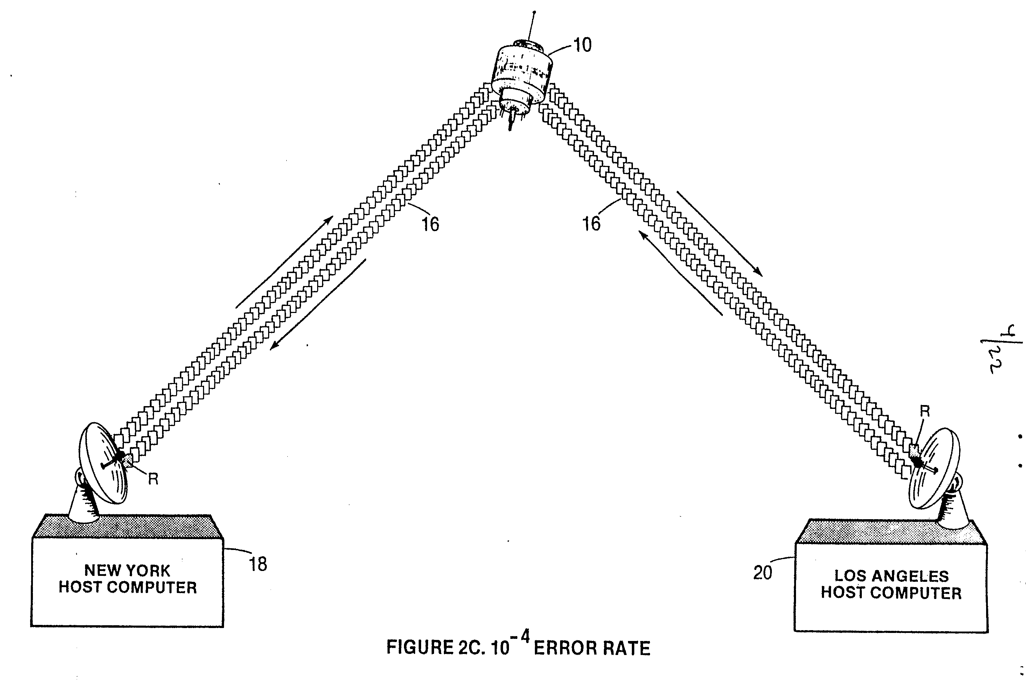

Fig. 2C shows the acknowledgments for the first two frames and the negative acknowledgment (reject) of

the third frame being received by the two hosts.  As
with the previous example, .7 seconds have elapsed
between the time both hosts sent their first message
and the time they received the acknowledgment/reject
frame.  At this time, both Extended SDLC and SDLC
protocols dictate that they must retransmit the frame
in error and any frames that follow it.

It is easy to see that both of these protocols can
successfully send only 1,000 bytes (2 frames) every .7
seconds while the link is subjected to an error rate of
$1 * 10^{-4}$.  This represents a link utilization of only
.7%.

Extended SDLC allows for 127 outstanding messages
which provides for better link utilization than SDLC
when conditions are optimal and the link error rate is
$1 * 10^{-7}$.

Recall that in the conceptual link each direction
contained 135 slots corresponding to the number of 500
byte frames that could be placed on the link in .35
seconds.

Fig. 3A shows both stations filling the link with
135 frames of data.  Fig. 3B shows them continuing to
place frames on the link until they reach the limit of
127 frames outstanding.  At the time shown here (.35
seconds after transmission of the first message) the
receiver has placed the first acknowledgment on the
link.

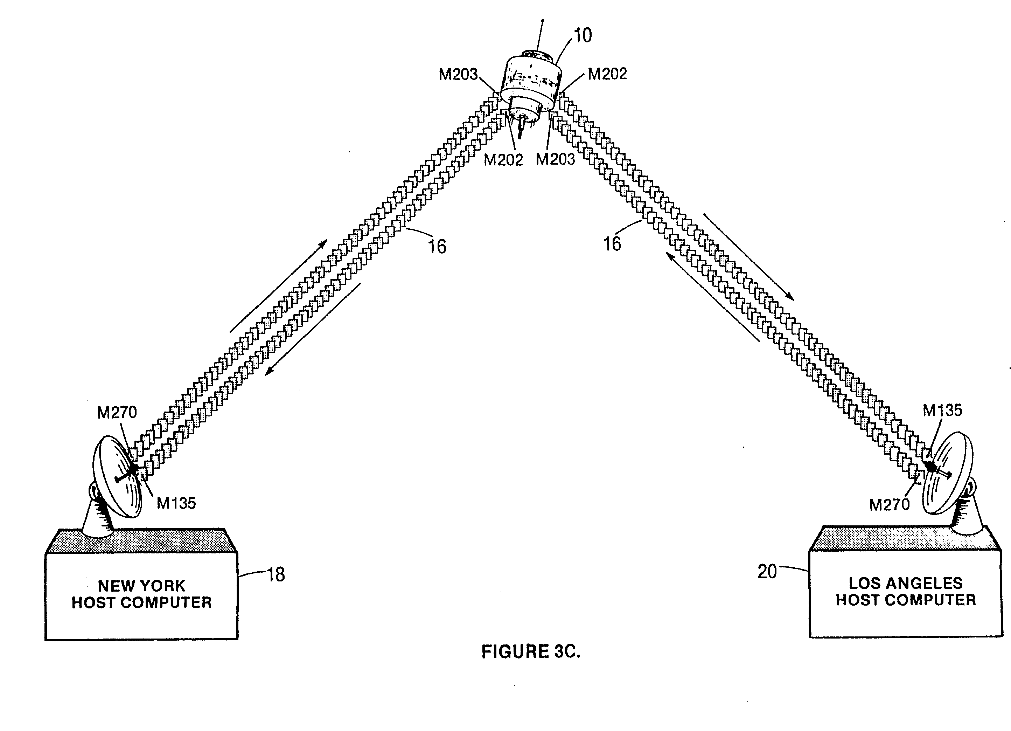

Fig. 3C shows both directions of the link filled
with acknowledgment (non-data message) traffic.  After
the first acknowledgments are received, the stations
both come out of idle state and begin sending message
traffic and the pattern repeats.

From the diagrams, it can be seen that Extended
SDLC successfully delivered 63,500 bytes (127-500 byte
frames) in .7 seconds.  This represents a link

0162478

utilization of 47% (63,500 bytes/135,000 bytes) under
optimum link conditions.

Extended SDLC performance when the error rate
increases to $1 * 10^{-4}$ is the same as SDLC and is
capable of providing a link utilization of only .7%.
The "Go-back-n" requirement of the above identified
protocols clearly results in inefficient information
transfer over high speed satellite links.

In contrast, the present invention permits the
user to set the number of frames outstanding to a value
that will optimize the use of the communications link.

Fig. 3A represents the start up activities on a
link constructed in accordance with the present
invention.  However, Fig. 3C shows the same link .7
seconds after the first message was sent by both hosts.
Both directions are filled with message traffic and
acknowledgments are "piggybacked" onto information
(message) frames.

Operation of the present invention under varying
error rates, is predictable.  It is related only to the
frame size used, the protocol window size and the error
rate experienced.  Using 500 byte frames, an error rate
of $1 * 10^{-7}$ will cause one error in every 2500 frames.
Since in accordance with the present invention the
frame in error is simply retransmited, only the time it
takes to send the original (failing frame) is lost.
Link utilization in the present invention, therefore,
at $1 * 10^{-7}$ would be impacted by .04% for error
transmisions, given a correct window size.  This
represents link efficiency of 99.96%.

Operation of the method of the present invention,
under degraded ($1 * 10^{-4}$ error rate) conditions, would
be impacted because every third frame would have to be
retransmitted.  In this case, link utilization would
drop to 67%, still better than the Extended SDLC
performance on an optimal circuit.

In conclusion, of the three described protocols (SDLC, Extended SDLC and that of the present invention) only the protocol of the present invention, with its worst case utilization rate of 67%, uses the full capacity of the communications link. Both SDLC and Extended SDLC, with their worst case utilization rates of .7%, demonstrate a substantial and significant falling off of their link efficiency capabilities as link quality deteriorates. The protocol of the present invention represents a breakthrough in high volume communications link efficiency and allows for the use of high speed communication links at full capacity for the first time.

As described earlier, in accordance with the present invention, a sending station transmits sequentially numbered frames of information to a receiving station via a relay satellite transmission link. The receiving station, after a propagation delay through the transmission link, receives the frame of information. The distant receiving station evaluates each of the frames of information to determine whether the transmission was any good. If a particular frame of information is valid, the receiving station stores the information in a temporary storage location or passes it to its associated host, depending upon the status of previously received frames. If the previous frames in the sequence were successfully received and have already been passed to the host, the distant receiving station passes the current frame to the host and sends an acknowledgment for that frame back to the sending station.

If a received frame is not valid, e.g. damaged in transit, or where it is never received, such as indicated by a gap in the received sequence numbers, the receiving station makes a notation in the temporary storage area that the sequence number is missing, This is called a HOLE. The receiving station transmits a
selective reject message to the sending station which
message selectively rejects the frame with that
sequence number.

At the sending end, the sending station receives
the acknowledgment and selective reject information
from the distant receiving station. It is to be
understood that when the originating station first
transmits a frame of information, it also stores that
information in a temporary storage area in a location
corresponding to the sequence number of the particular
frame. Therefore, when an acknowledgment is received
from the distant receiving station that a particular
frame has been successfully received, the originating
station can discard the corresponding frame from the
temporary storage area. On the other hand, when a
selective reject command is received from the receiving
station, the sending station retrieves the indicated
frame from the temporary storage area and retransmits
the frame over the transmission link with an indication
that the frame is sent in response to a selective
reject command.

When this response is properly received by the
receiving station, an acknowledgment of proper receipt
is sent back to the sending station, and the receiving
station passes the response frame to the host.
Thereafter, all frames which follow the response frame
in the sequence, but which were held in abeyance
pending filling of the HOLE, are also passed to the
host and acknowledged to the sending station.

It is to be understood that in accordance with the
present invention, a significant number of selectively
rejected frames can be outstanding at a given time so
long as this number does not exceed a predetermined
maximum value. Thus, while a particular transmitting/
receiving station is waiting to receive a frame from a sending station in response to a selective reject command, it can also be receiving frames having sequence numbers which are greater than the selectively rejected frames. By permitting a multiplicity of selectively rejected frames to be outstanding at any one time, a more realistic allowance for propagation delay is made and a higher link utilization is achieved.

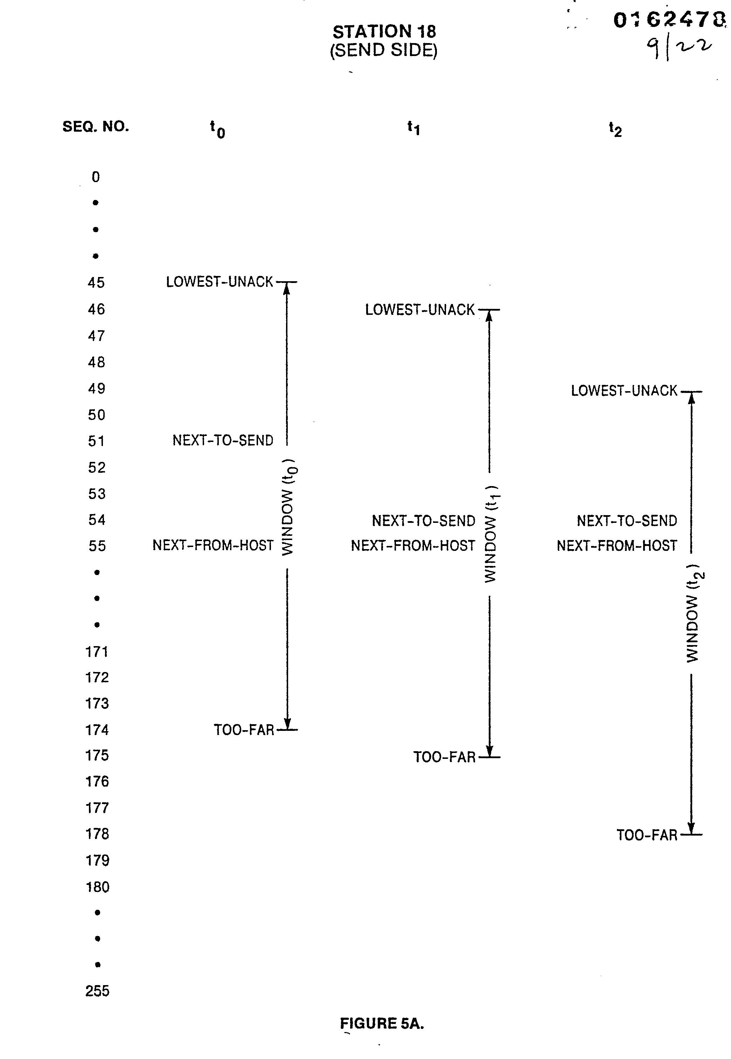

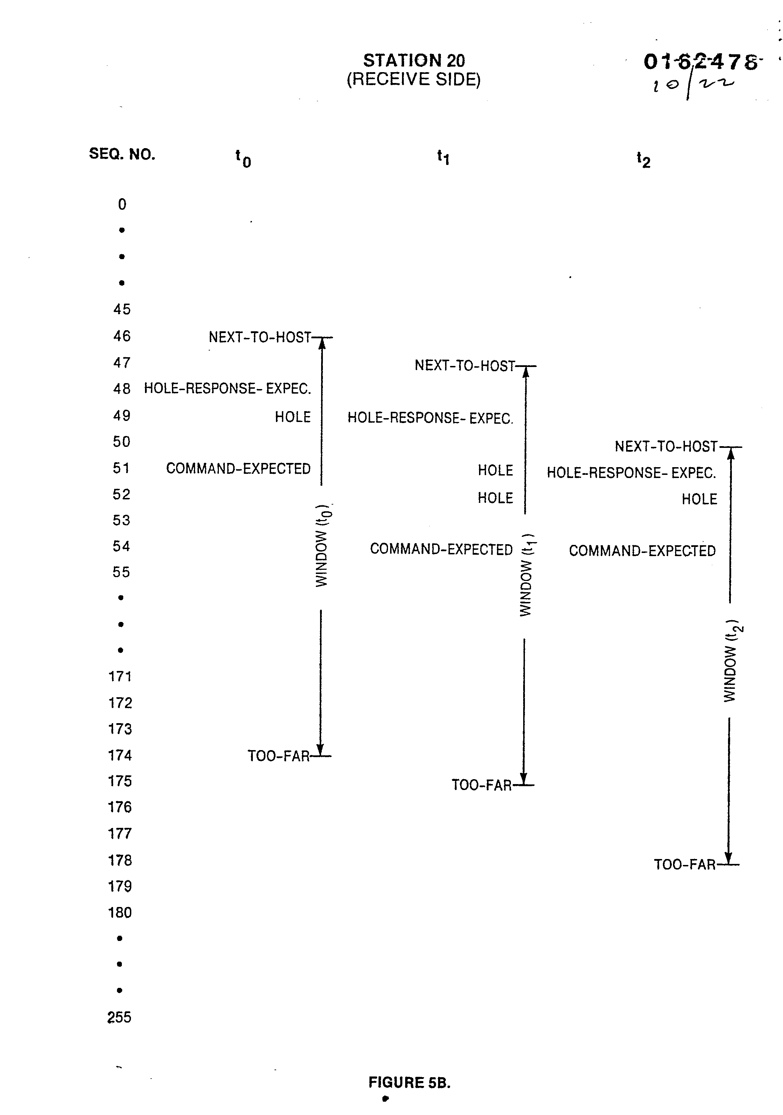

Referring to Figs. 5A and 5B, there are provided illustrative examples of the types of entries which the data flow processor 22 makes in the table that is maintained in the temporary storage areas. Fig. 5A illustrates entries in the temporary storage area when the station is an sending station 18, while Fig. 5B illustrates entries made in the temporary storage area when the station is a receiving station. Assume for purposes of this example that Fig. 5B corresponds to the temporary storage area for a distant receiving station 20.

In order to simplify the following description, the transmitting/receiving 12, the data flow processor 22, and the host computer 18 for shown in Fig. 1 will be referred to collectively as the "sending station 18," while the transmitting/receiving station 14, the data flow processor 24 and the host computer 20 of Fig. 1 will be referred to collectively as the "receiving station 20."

In the example provided in Figs. 5A and 5B, it is assumed that the sequence used is 256 frames long. It is also assumed that, at the particular point in time shown, $t_0$, the distant receiving station 20 has received valid frames for sequence numbers 0 through 47 and 50. It is also to be assumed that the frames corresponding to sequence Nos. 48 and 49 were invalid or were not received, and that the next frame expected to be received by the distant receiving station has sequence number 51.

At the sending station 18, frames have been transmitted corresponding to sequence Nos. 0 through 50, and acknowledgments have been received from the distant receiving station 20 for sequence numbers up to 45. In Fig. 5A, sequence No. 46 has the notation LOWEST__UNACKED, which indicates that this sequence number is the lowest sequence number which has yet to be acknowledged by the distant receiving station. Sequence No. 51 has the notation NEXT__TO__SEND. This indicates that sequence No. 51 will be the next frame to be sent by the sending station 18. Sequence No. 55 bears the notation NEXT__FROM__HOST. This indicates that frames 52 through 54 have been received from the host for transmission, and that the frame corresponding to sequence No. 55 is expected to be the next frame to be received from the host for transmission. Finally, sequence No. 174 bears the notation TOO__FAR. This is the sequence number which corresponds to the highest sequence number which the originating station will be permitted to transmit given that sequence Nos. 46 and higher have yet to be acknowledged.

In accordance with the present invention, this sequence number is determined by adding 1 to the user specified maximum sequence length and dividing by 2. Thus, if the lowest unacknowledged frame sequence number is 46, the data flow processor will not permit frames having sequence numbers greater than 174 = 46 + ((255 + 1)/2) to be transmitted over the link.

Referring more particularly to Fig. 5B, the notations in the temporary storage area for the distant receiving station will be discused in greater detail. With respect to sequence number 46, the notation NEXT TO__HOST is present. This indicates that the frame corresponding to this sequence number will be the next frame to be passed to the associated host of the receiving station 20. When the frame is actually passed to the host, the distant receiving station 20 will transmit an acknowledgment of receipt for sequence No. 56 to sending station 18.

The notation COMMAND__EXPECTED is next to sequence No. 51. This indicates that frames having sequence numbers up to, but not including, 51 have been received. Sequence Nos. 48 and 49 have the notation HOLE. This indicates that these frames were not validly received or not received at all. Sequence No. 48 includes the additional notation RESPONSE__EXPEC. This indicates that sequence No. 48 represents the lowest sequence number for which a selective reject has been transmitted for which a response from the sending station 18 has yet to be received. When the response frame for sequence No. 48 is properly received, the distant receiving station 20 will pass frame 48 to the host. Additionally, the distant receiving station 20 will transmit an acknowledgment for sequence No. 48 to the sending station. Finally, the notation RESPONSE__EXPECTED will be shifted to sequence No. 49 to indicate that a response frame for sequence No. 49 is the next expected to be received from the sending station 18.

As with the temporary storage area for the sending station, there is a sequence number which bears the notation TOO___FAR to indicate that if any frames are received which bear sequence numbers equal to or greater than sequence number 174, these frames are considered to be outside of the window and, therefore, invalid. Receipt of such frames indicates a potential problem in the system.

Referring to Figs. 5A and 5B, columns corresponding to points in time $t_0$, $t_1$, and $t_2$ are shown which illustrate the receipt by the receiving station 20 of commands and response frames from the sending station 18. In Fig. 5A, at time $t_1$, it can be seen that, since $t_0$, the sending station 18 has received an acknowledgement of receipt of frame 45 by receiving station 20; has sent out frames 51 through 53; and still expects to receive frame 55 from the host. Note also that sending station 18 has also updated its TOO__FAR value.

In Fig. 5B, at time $t_1$, the receiving station 20 has already passed frame 46 to its host; has received a response frame for the HOLE at frame 48; has detected new HOLES at frames 51 and 52; and has properly received frame 53. Note also that it has incremented its TOO__FAR value. In connection with the two new HOLES, the read processing section 42 of the receiving station 20 queues a selective reject command in the express queue of the write processing function 26, and the write processing function 26 responds by sending out a supervisory frame which selectively rejects frames 51 though 52.

At time $t_2$ in Fig. 5A, sending station 18 has received acknowledgements for frames 47 and 48 and is waiting for acknowledgements starting from frame 49; has not sent out any new frames, as compared with $t_1$; and has not received any further frames from the host. Note that TOO__FAR has been advanced by two more frames.

At time $t_2$ in Fig. 5B, receiving station 20 has received an I frame response for frame 49; has passed frames 47 through 49 to the host; has not received any new frames; and has advanced its TOO__FAR value to Frame 178.

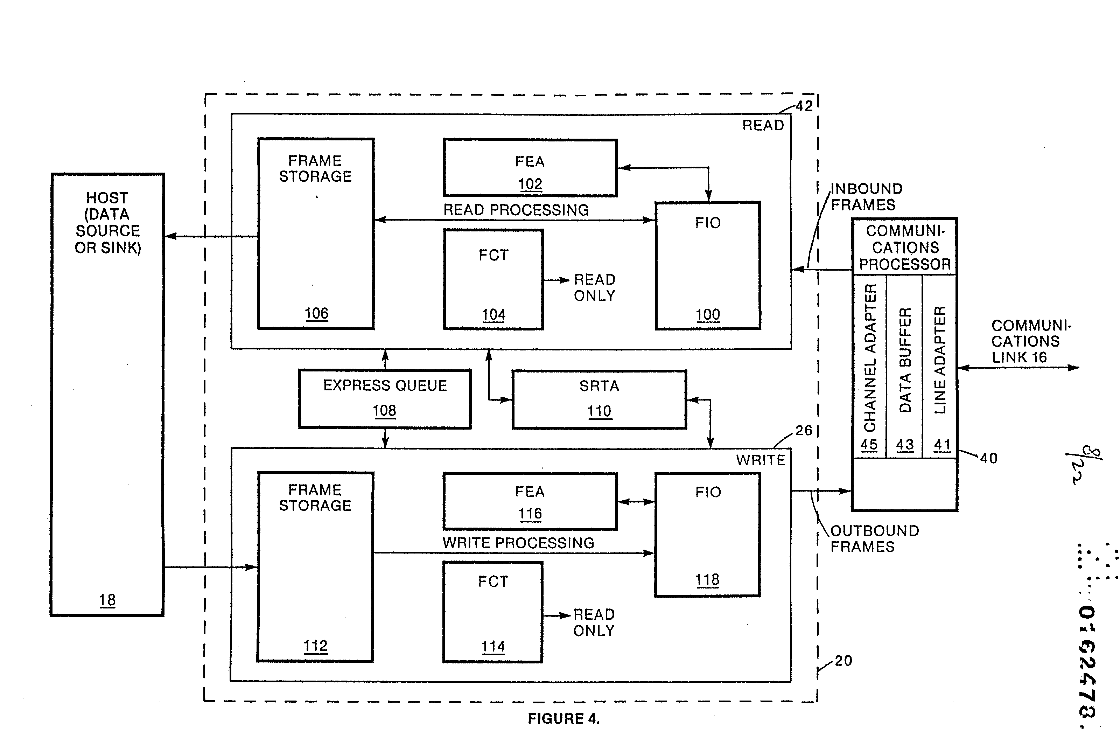

Referring to Fig. 4, the data flow processor associated with one of the stations is illustrated. It is to be understood that the data flow processors for the other stations in the system have a similar configuration and operation. It is also to be understood that the data flow processor can be implemented as a unit separate from the host computer or can be incorporated as a part of the host computer. As shown in Fig. 4, the data flow processor is broken out from the host computer.

Generally, the data flow processor performs a write processing function and a read processing function. The write processing function operates upon outbound path information units (PIU) from the host and forms the PIUs into frames. The read processing function provides inbound path information units (PIU) to the host that are constructed from information contained in frames received from the transmission link.

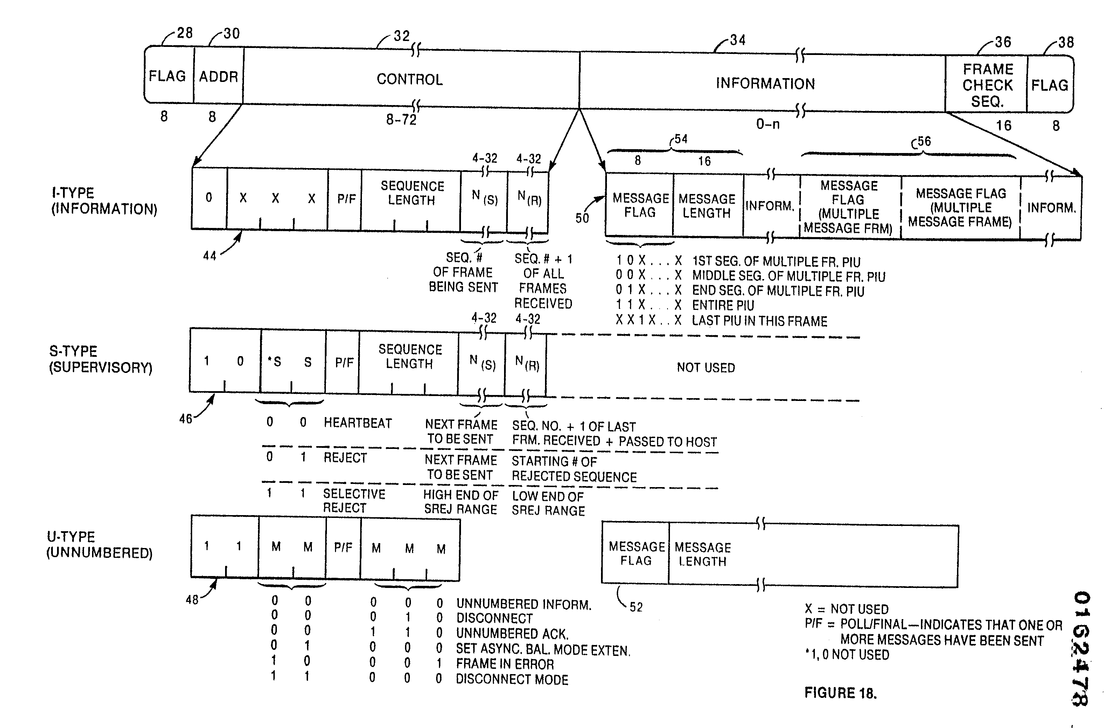

A typical frame is illustrated in Fig. 18. The frame includes flag bits 28, an address 30, control bits 32 which indicate the type of frame, the information itself 34, a frame check sequence 36, and a flag 38. Address 30 can be that of the station to which information is to be sent, that of the station sending a response, or a broadcast address.

The control bits identify the nature of the frame, for example, an information frame, a supervisory frame, or an unnumbered frame. The control bits also specify the maximum sequence length, as well as identify the sequence number $N_S$ of the information being sent, if the frame is an information frame, and $N_R$, the sequence number plus 1 of the highest frame which has been successfully received.

After the frames are formed, the write processing function 26 passes these frames to a transmitter/receiver section 40 for transmission across the link.

With respect to the read processing function 42, inbound frames from the transmitter/receiver section 40 are evaluated: 1) to determine whether the frames are valid, 2) to derive information from the frames and the associated sequence number $N_S$ for the frame, 3) to derive the frame receipt acknowledgment sequence number $N_R$, 4) to determine whether any frames have been selectively rejected or whether there is a reject command; and 5) to initiate, maintain, and terminate the communications link.

The read processing function 42 and the write processing function 26 are interactive in that the write processing function 26 requires information in order to form outbound frames and the read processing function requires information to check the incoming frames. With respect to the write processing function 26, this information relates to frames to be acknowledged, frames which are to be selectively rejected, when to go into reject state, and frames to be retransmitted. With respect to the read processing function 42, this information includes the write processing protocol values of the next frame that the write function expects to send and the lowest unacknowledged frame.

The information provided by the read processing function 42 to the write processing function 26 takes on at least two contexts. In the first context the information relates to frames which the write processing function 26 has transmitted to the distant receiving station 20. In this context, the read processing function 42 identifies the frames acknowledged by the distant receiving station as having been successfully received, identifies the frames selectively rejected by the distant receiving station, and identifies the frames rejected by the distant receiving station.

As such, the information passed from read processing function 42 to write processing function 26 are directed to the sliding of the transmit window of the write processing function and to queue notations of high priority frames that the write processing function must write. The read processing function 42 also updates the lowest unacknowledged sequence number in the transmit window of the write processing function 26. In response to this information the write processing function 26: 1) resends one or more frames in response to a selective reject, 2) resends a block of frames in response to a reject command, or 3) continues with its transmission of new frames in the absence of any selective rejects or block rejects.

In the second context, the read processing function 42 is receiving information frames transmitted from the distant transmitting/receiving station. Read processing function maintains a read window which is updated as frames are passed to the host. Write processing function 26 has access to the read window and inserts the appropriate $N_R$ into some outgoing frames to acknowledge to the distant station that frame $N_R - 1$ has been successfully received and passed to the host. In response to a selective reject or reject command, write processing function 26 forms a supervisory type frame to instruct the distant station that a particular sequence number frame has not been successfully received.

Thus, where there is a bidirectional flow of information between a local station and a distant station, the information passed between the read processing function 42 and the write processing function 26 have two identities.

An information type frame and a supervisory type frame are provided in accordance with the present invention. In Fig. 18, the information, or I type frame, is indicated by a particular arrangement of data in control block 32. This arrangement is illustrated in box 44. The information type frame is used to transmit new information, or to retransmit information in response to a reject or selective reject command.

Conversely, a supervisory or S type frame is shown in Fig. 18 and bears reference designation 46. The supervisory type frame is used to send a reject, a selective reject, or a status message called a heartbeat, along with the designation of the frame which is being selectively rejected, or the first frame of the sequence which is being rejected.

A further type of frame called the unnumbered or U type frame is shown in Fig. 18, bearing reference numeral 48. The unnumbered type frame is used during system start up to exchange start up parameters and instructions, when system type errors are present, or when the system is being disconnected.

Referring more particularly to the I type control block 44, in the preferred embodiment of the present invention, an I type frame is indicated by a logic zero in the first bit of the control block 32. The next three bits are unused, the fifth bit called the poll/final bit is used to cause a break in the read program on the distant end, the sixth through eighth bits indicate the number of bits which are being used in the sequence numbering. With respect to this latter indication, the number of bits in the present example can vary from 4 to 32 bits. As shown in Fig. 18 and block 44, the sequence length indication will be followed by two blocks of data. Each block has a number of bits which is specified by the sequence length indication. The first block provides the sequence number $N_S$ which identifies sequence number of the information being sent. The second block is $N_R$ the sequence number, plus one, of the last frame which has been successfully received and passed to the host processor. It is to be noted that, in accordance with the preferred embodiment of the present invention, a frame will not be acknowledged as having been received, even though it was successfully received, until it has been passed to the host. A frame will not be passed to the host unless all previous frames have been passed to the host. When a HOLE is present in the received sequence the frames which have been successfully received, but which have sequence numbers that follow the sequence number for the HOLE, will not be passed to the host until the HOLE is filled.

When the I type frame is a response frame, ie. a response pertaining to a selectively rejected or a rejected frame, the address field 30 bears the address of the station which is retransmitting the frame.

An S type frame is identified by a logic 1 in the first bit and a logic 0 in the second bit of the control block. The logical value of bits 3 and 4 of the control block indicate whether the transmitting/receiving station from which the frame was sent: 1) is sending a heart beat $(0,0)$; 2) is rejecting a sequence of frames starting at the indicating sequence number $(0,1)$; or 3) is selectively rejecting the frame for the indicated sequence number $(1,1)$. As shown in Fig. 3, block 46, bit 5 and bits 6 and 7 have the same function as in the I type frame. The $N_S$ block indicates the sequence number of the next frame to be sent by the transmitting/receiving station which originated the supervisory frame. The $N_R$ block in a heart beat is the sequence number plus 1 of the highest frame successfully received by the transmitting/receiving station. Where a reject condition is indicated, the $N_R$ block indicates the starting sequence number of the frames which are being rejected. Where a selective reject condition is indicated, the $N_R$ block indicates the sequence number of the frame which is being selectively rejected and which is to be retransmitted. In the preferred embodiment of the present invention, a sequence number range is specified, with the $N_R$ field representing the lower end of the range and the $N_S$ field representing the upper end of the range.

All I type frames and some U type frames have information fields that are used to transmit messages. In Fig. 18, the I type information field bears reference numeral 50, while the U type information field bears reference numeral 52. U type information fields are used to manage link activities such as link initiation or disconnect. The U type information fields and the I type information fields can have the same format. I type frame information fields are used to hold the path information units (message) presented by the host. The maximum length of the information field is set by the user and need not have any relationship to the length of the messages to be sent.

The information field within a given frame can contain a portion of a message, or one or more complete messages. Within the information fields, a control area is placed at the start of each message segment contained within the frame. A message segment is defined to be either a complete message that fits in the current frame, or the portion of a message which requires several frames to accommodate all of the information. In block 50, two control areas 54 and 56 are shown. Each control area includes a message flag which indicates whether the message segment is an entire message or a portion of a larger message, and a message length designation to indicate how long the following segment of information will be. Where two or more messagess or a complete message and a portion of another message can fit within an information field of a frame, additional control areas, such as control area 56, will be present in the field. However, where only a single message can fit within the field, only control area 54 will be present.

In relation to prior methods for implementing satellite communication systems, error recovery methods called "Go-Back-n" are used which dictate that a frame received in error or a missing frame sequence number will be rejected by the receiver. All frames that follow the rejected sequence number are discarded by the receiver until the good copy of the rejected frame has been received. Thereafter, frames following receipt of the good copy of the rejected frame will be accepted by the receiver. Rejection will always cause the transmitter to begin retransmitting frames starting at the rejected frame sequence number.

In the present invention, a selective repeat technique is used. With this technique, the receiver only rejects the missing or error frames. Frames that are received in good condition are kept and stored.

The use of this technique avoids costly retransmission of frames and results in dramatic improvements in link efficiency. In the implementation of this technique, a different method, from prior techniques of managing sequence numbers, is used. This method involves the use of a valid sequence number range, called a window. See Figs. 5A and 5B.

A window is a range of sequence numbers wherein only the sequence numbers falling within the range can be processed by the receiving/transmitting station at any given time. In the preferred embodiment of the present invention, the window size is equal to the maximum sequence number selected plus 1, divided by 2. As described in an earlier section of this disclosure, this sequence number is selected by the user and dictates the number of frames which can be outstanding at any one time between acknowledgements.

The window size is the same for both the sender and the receiver for transmission of information in any given direction across the transmission link and is preferably never greater than the window size defined above. In the preferred embodiment of the present invention, the temporary storage areas 27 and 43 need be only large enough to hold all of the frames in the specified window. As frames are sent and/or received, the window slides through the range of sequence numbers and has a location, at any time, which is dependent upon the particular frames which have been sent, received, rejected or selectively rejected. See Figs. 5A and 5B.

As discussed briefly above, the present invention will be described in terms of a general purpose digital computer under control of a series of instructions. However, it is to be understood that the present invention can be implemented by way of a separate arrangement of an intelligent controller and data storage areas.

Referring more particularly to Fig. 4, the preferred embodiment of the present invention will now be described in greater detail. Fig. 4 is intended to illustrate the flow of information between the link and the host computer by way of the the data flow processor 20 of the present invention. At the righthand side of Fig. 4, a communications processor 40 is illustrated. Such a processor includes a line adapter 41, a data buffer 43, and a channel adapter 45.

The communications processor 40 is intended to provide an interface between a data channel, such as from a host computer, and a communications link, such as a satellite link. Thus, when data is being transmitted by the host, the channel adapter section 45 of communications processor 40 transforms the data received from a host, on the host channel, into a form suitable for handling by the line adapter 41. This transformed data is stored temporarily in data buffer 43. Line adapter 41, in turn, transforms the data stored in data buffer 43 into a form which can be placed on the communications link 16 via receiver/transmitter 12. Similarly, when data is being received from the communications link 16, line adapter 41 transforms the data into a form which is understandable by channel adapter 45. This transformed data is stored temporarily in data buffer 43. Channel adapter 45 thereafter converts the data in data buffer 43 into a form which can be understood by the equipment attached to the host channel.

As part of its receive state operation, the communications processor provides, as a part of the information provided to the channel, frame status information which indicate whether the communications processor 40 detected errors in the data due to problems with the communications link 16 or the communications processor 40 itself.

At the left of Fig. 4, a host computer 18 is shown. It is to be understood that host computer 18 can also be a data source or data sink.

The data flow processor 20 of the present invention is shown in Fig. 4 enclosed within a dashed line. The data flow processor 20 receives inbound frames from communication processor 40, processes these frames, and passes the appropriate information from these frames to host 18.

Similarly, host 18 provides information to data flow processor 20 for transmission on the communications link 16. Data flow processor 20 assembles this information into appropriately formatted frames and passes these frames to communication processor 40 for transfer to the communications link 16.

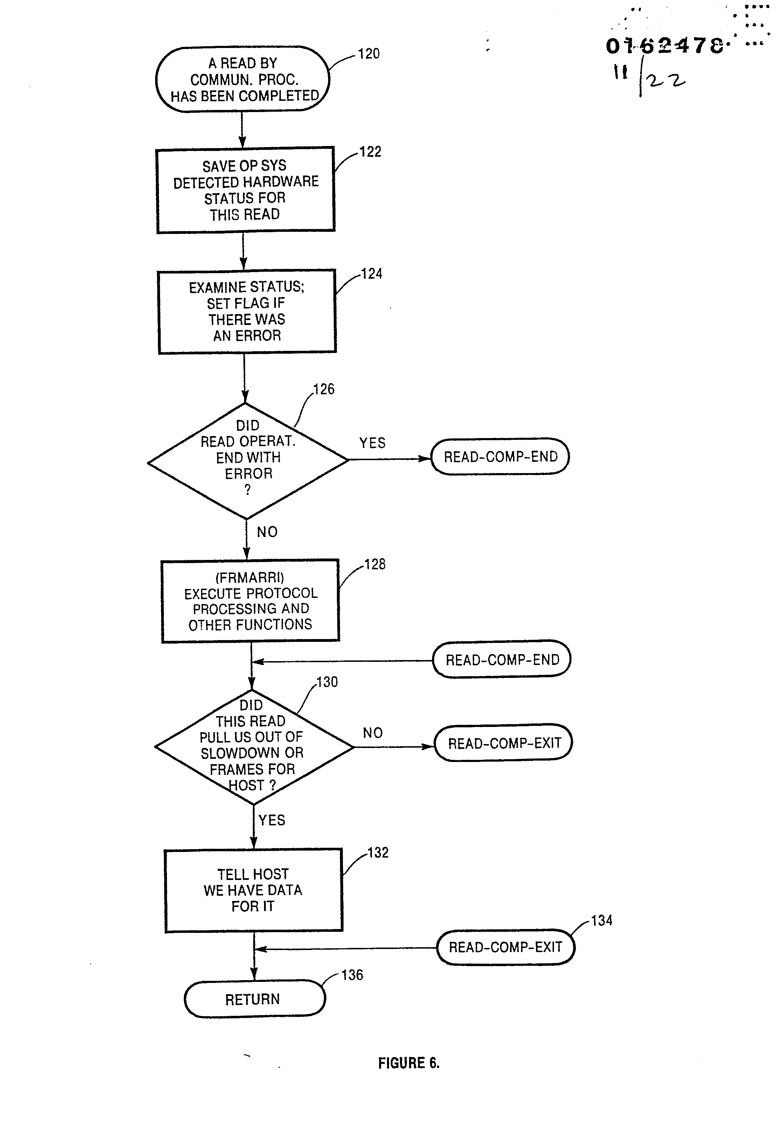

As illustrated in Fig. 4, data flow processor 20, in its preferred embodiment, is implemented within the host computer under control of a series of instructions. The blocks shown in Fig. 4 define the storage areas utilized by the data flow processor, it being understood that the writing of data into or reading of data out of any of the specified storage areas is performed by the host under control of the series of instructions. These instructions will be described in greater detail in connection with Figs. 6 through 17.

Referring more specifically to the data flow processor 20 of Fig. 4, it can be seen that the read processing function 42 utilizes four storage areas. Inbound frames from the communications processor 40 are initially stored in FIO buffer 100. Selected portions are extracted from the frame stored in FIO buffer 100 and placed into a frame element area, FEA 102. The portions which are stored in FEA 102 include the control field of the frame, the sequence numbers, and the frame status information.

A frame control table (FCT) 104 is provided which lists the bit patterns for the possible types of frames, i.e., commands, responses, initialization, etc., which can be exchanged along the communications link. The read processing function 42 utilizes the information stored in the FIO 100, the FEA 102, and the FCT 104 to identify the information contained in the frame and to place that information into the frame storage area 106 in proper position relative to other frames which have been received. Frame storage 106 then provides the frames of information to the host 18.

In connection with the read processing function 42, the inbound frames of information are checked to determine: 1) whether they represent a new frame of information, 2) whether the frame of information was sent in response to a reject or selective reject command, 3) the absence of frames which should have been received in light of the sequence number of frames which already have been received, or 4) whether the frame is a request from the sending station for a retransmission of certain frames of information.

With respect to situations three and four, read processing function 42 will place an appropriate instruction in EXPRESS QUEUE 108 for implementation by write processing function 26. Where the number of missing frames exceeds a predetermined amount, a reject command, REJC, will be queued in the EXPRESS QUEUE 108. Where fewer than the predetermined amount are missing, a selective reject command will be queued in the EXPRESS QUEUE 108. Where a request for retransmission of frames is received, read processing function 42 will queue an I frame response, IFRR, in EXPRESS QUEUE 108.

When read processing function 42 places selective reject commands in the EXPRESS QUEUE, it also initiates a selective reject timer associated with selective reject time-out area 110. Read processing function 42 maintains a record of the status of each frame of the frame sequence being exchanged and maintains this status information in the selective reject time-out area 110. Thus, the selective reject time-out area, SRTA, includes a timing function for each selectively rejected frame, and a "received" indication for frames which have been received successfully.

Similarly, write processing function 26 has a frame storage area 112, a frame command table 114, a frame element area 116, and a frame input/output buffer 118. Frame storage area 112 receives information from host 18 for transmission. Write processing function 26 is responsive to the information in frame storage 112 and to the commands in EXPRESS QUEUE 108 and assembles frames into the FIO buffer 118 for supply to the communication processor 40. Write processing function 26 first processes the instructions in EXPRESS QUEUE 108 and, thereafter, processes the information in frame storage 112. Write processing function 26 accesses the FEA 116 and the FCT 114 to obtain information for incorporation into the frames.

Generally, the data flow processor 20 has a number of states: 1) a link state in either an IS mode or an ITS mode; 2) a transmit state in either a slow-down or ITS mode, or 3) a receive state in either a reject or ITS mode. As used above, the IS mode occurs during the initialization of the communications link. In the IS mode, there are a number of IS substates which involve the orderly progression of the communications link from no communication to active communication.

The ITS mode referred to above involves the transfer of information in the form of commands and responses. Thus, when the data flow processor is in the receive state, ITS mode, it is receiving commands or responses from the remote station directed to the information being transferred from the remote station. When the data flow processor is in the transmit state, ITS mode, it is transmitting commands or responses directed to the information that it is transferring across the link.

When the data flow processor 42 is in the receive state, reject mode, read processing function 42 can process only reject responses from the remote station. All other frame types, such as I frame commands, are ignored.

When the data flow processor 20 is in a transmit state, slow-down mode, write processing function 26 can process only instructions from the EXPRESS QUEUE 108. In the slow-down mode, the data flow processor 20 has determined that there is already a maximum number of frames outstanding on the communications link and, therefore, no new frames of information ought to be transmitted. Thus, only frames which relate to previously transmitted and outstanding frames can be transmitted.

Detailed Read Processing:

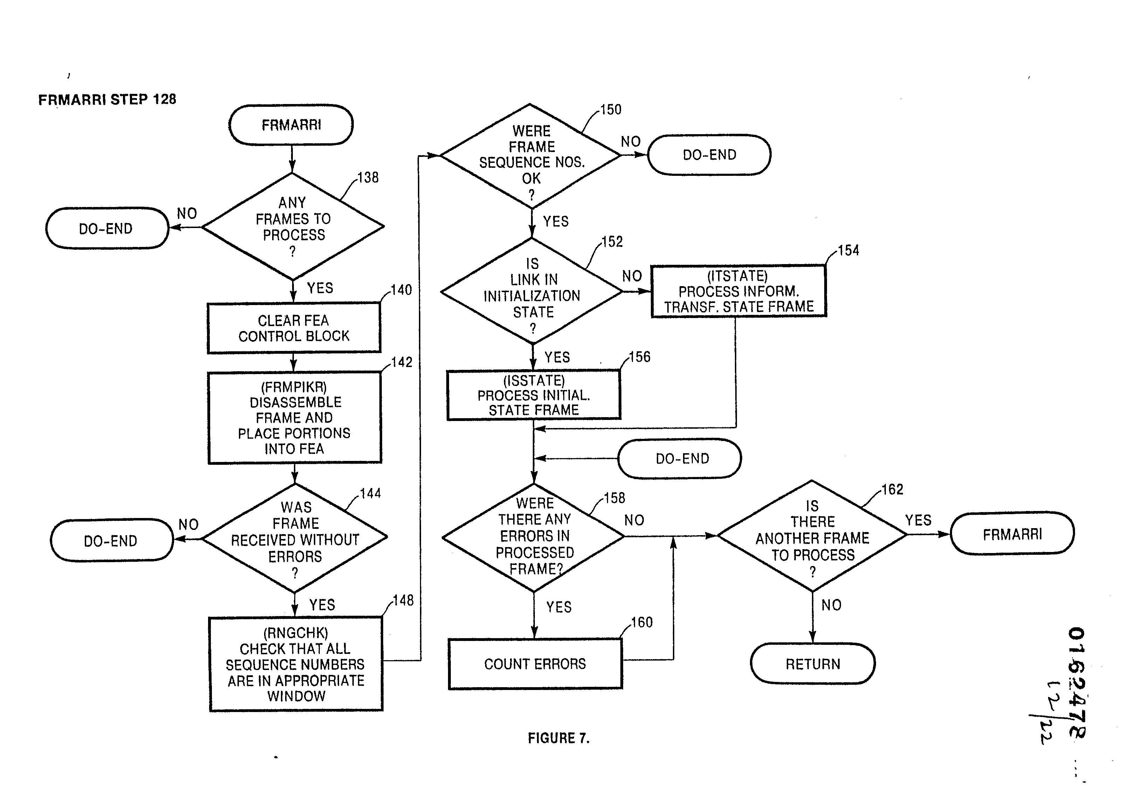

Referring more particularly to Figs. 6 through 12, the read processing function 42 will now be described in greater detail. Fig. 6 describes, in general terms, a sequence of operations for obtaining inbound frames from communications processor 40, processing these frames in read processing function 42, and passing the processed frames to host 18. Certain of the operations described in Fig. 6 will be described in further detail in connection with Figs. 7 through 12.

The following description will be better understood if reference is also made to Fig. 4. The read processing function 42 begins at step 120. At this point, a read has been completed by the communication processor 40. This means that the communication processor 40 has received frames from the communications link 16 and has written these inbound frames into FIO buffer 100. Step 120 detects the fact that such a read has been completed. In steps 122 and 124, read processing function 42 saves any indications of hardware errors detected by the system during the read operation by communication processor 40. In step 124, appropriate flags are set to indicate the existence of hardware errors. By hardware errors, it is meant errors which arise from the malfunctioning of the various equipment connected in the communications path. This includes malfunctions of the communications processor 40.

In step 126, if no such hardware errors are detected, step 128 is executed wherein the frames are evaluated and the protocol of the present invention implemented. Step 128 will hereafter be identified as FRMARRI step 128. If, on the other hand, it is determined in step 126 that the read operation ended in a hardware error, FRMARRI step 128 is bypassed. Thereafter, step 130 is executed in which it is determined whether the current read has pulled the system out of "slow-down" mode, or whether frames are available for the host. Recall that the data flow processor enters a "slow-down" mode whenever it determines that the maximum permitted number of frames are outstanding on the communications link; in other words, the link is full. The data flow processor 20 will exit the "slow-down" mode when it receives acknowledgments of frames received by the remote station which acknowledgments indicate that there are now fewer than the maximum permitted number of frames outstanding on the communications link.

If it is determined that the link is still full, or that no frames are available for the host, read processing function 26 will proceed to step 134 and return control via step 136 to host 18. If, on the other hand, frames for the host have been obtained, step 132 will be executed to tell the host that data is available for it. Thereafter, steps 134 and 136 will be executed to return control to the host.

Referring now more particularly to Fig. 7, FRMARRI step 128 will be described in greater detail. In step 138, FIO buffer 100 is examined to determine whether there are any frames to process. If not, the system jumps to DO__END at step 158. If, on the other hand, there are frames in FIO 100 to process, FEA 102 is cleared. See step 140. A frame is then selected from FIO buffer 100 and disassembled in step 142. Additionally, in this step, portions of the frame are placed in FEA 102. These portions include the control field, including the sequence numbers and frame type information. Additionally, the address field of the

0162478

frame and the frame status information from the communication processor 40 are stored in FEA 102. The remainder of the frame is left in FIO buffer 100.

Thereafter, step 144 is executed in which it is determined whether the frame was received without errors. These are the errors detected by the communication processor 40 and include errors caused by problems on the communications link or those within the communication processor 40 itself. If errors were detected, the system proceeds to DO_END and step 158. If the frame was received without errors, step 148 is executed in which the sequence numbers are checked to determine whether they are within the appropriate ranges. Hereinafter, step 148 will be referred to as RNGCHK step 148.

In step 150, the results of RNGCHK step 148 are checked for any out-of-range conditions. If the frame sequence numbers were out-of-range, the system proceeds to DO_END in step 158. In other words, a frame with an out-of-range sequence number is ignored. If, on the other hand, the sequence number was within range, step 152 is executed in which it is determined whether the system is in a link initialization state. Recall that when data flow processor 20 is in a link initialization state only link initialization commands and responses can be processed. If such is the case, step 156 is executed wherein various link parameters are exchanged between the local host and the remote host. In turn, these parameters are examined by each station and a compromise set of parameters are agreed upon under which active communication is to occur.

If, on the other hand, data flow processor 20 is not in the link initialization state, step 154 is executed. Step 154, hereinafter, will be called ITSTATE step 154. In this step, information transfer state frames are processed. This includes the examination of the frame to determine whether it corresponds to a reject response, an I frame command, an I frame response, a reject command, a selective reject command, an unnumbered command, or a request that the system enter a initialization state. ITSTATE step 154 will be described in detail in the following material.

After ITSTATE step 154 or ISSTATE step 156 is processed, read processing function 42 proceeds to step 158. In this step, a check is made for any errors in the processing of the frame. If such errors did occur, step 160 is executed to count them by type. If no errors were detected, step 162 is processed in which a check is made of the FIO 100 for any other frames to be processed. If there are more frames in FIO 100, read processing function 42 returns to step 138 to process the additional frames. If, on the other hand, no additional frames are found in the FIO, read processing function 42 returns to step 130 in Fig. 6.

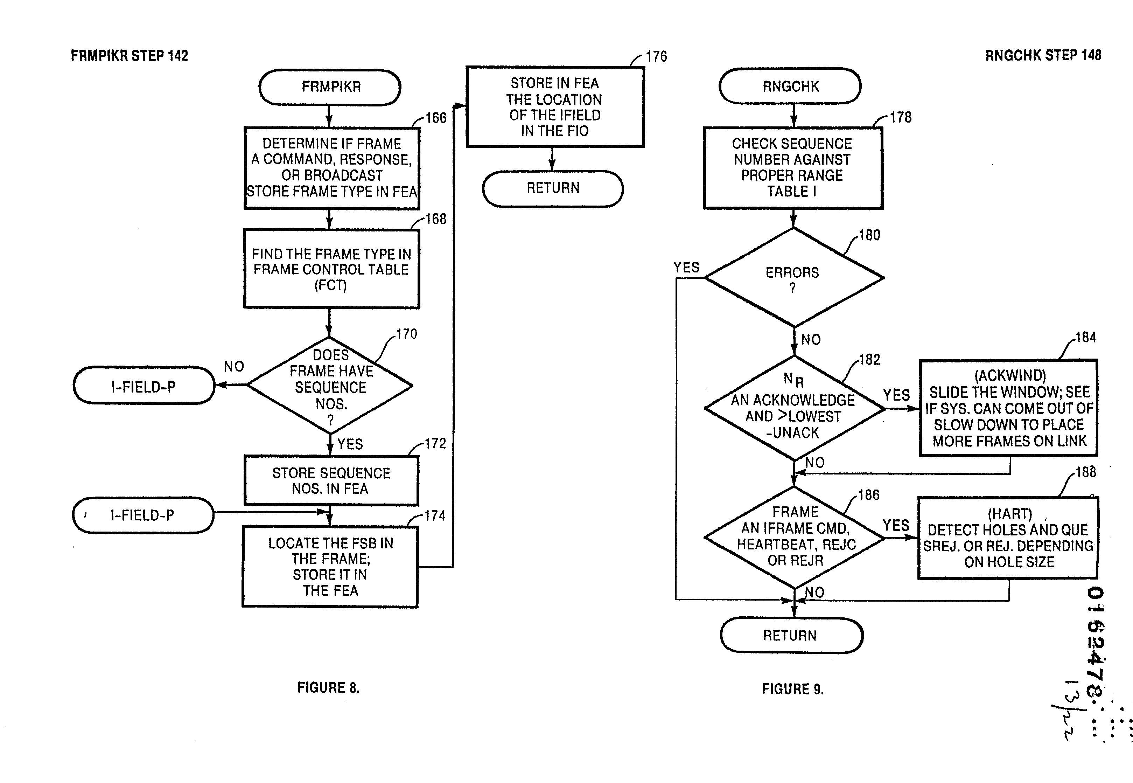

Referring now to Fig. 8, FRMPIKR step 142 of Fig. 7 will now be described in greater detail. Recall that FRMPIKR step 142 disassembles the frame and places portions of the disassembled frame into the FEA 102. Step 166 is first executed to determine if the frame is a command, a response or a broadcast. Earlier in the discussion in connection with Fig. 18, it was stated that a command is indicated if the address field of the frame contains the address of the local receiving station. On the other hand, a response is indicated if the address field contains the address of the remote sending station. A broadcast is indicated if the address field contains all ones. The frame type indication is thereafter stored in FEA 102.

Thereafter, step 168 is executed in which the frame type is located in the FCT 104. In step 170, the control field of the frame is examined to determine whether it contains sequence numbers. If such is the case, step 172 is executed in which the sequence numbers are stored in FEA 102. If, on the other hand, there are no sequence numbers in the control field, step 174 is executed in which the frame status information, FSB, is located in the frame and then stored in FEA 102. Finally, in step 176, the location of the information field, IFIELD, in the FIO buffer 100 is stored in FEA 102. Thus, it can be seen that, upon completion of FRMPIKR step 142, FEA will contain an indication of the frame type, any sequence numbers contained therein, the frame status information, and the location of any information field in the FIO buffer 100.

Referring now more particularly to Fig. 9, RNGCHK step 148 of Fig. 7 will now be described in greater detail. Recall that in this step, the sequence numbers extracted from the frames are checked to determine whether they are within the appropriate ranges. In step 178, the sequence number for the particular frame being processed is checked to determine whether it is within a given range according to the type of frame to which the sequence number corresponds. These ranges are provided in Table I.

-39-

TABLE I

| FRAME TYPE | SEQ. NO. | TEST |
|---|---|---|
| FCT_NSUBR = ACK | $N_R$ | .GE. LOWEST_UNACKED<br>AND<br>.LE. NEXT_TO_SEND |
| FCT_NAME = REJR | $N_R$ | = CMD_EXPECTED |
| FCT_NSUBR = QUE<br>(SREJ) | $N_R$ | .GE. LOWEST_UNACKED<br>AND<br>.LT. NEXT_TO_SEND |
| FCT_NSUBR = QUE<br>(REJC) | $N_R$ | .GE. LOWEST_UNACKED<br>AND<br>.LE. NEXT_TO_SEND |
| FCT_NSUBS = QUE<br>(IFRR ONLY N(S)) | $N_S$ | .GE. RESP_EXPECTED<br>AND<br>.LT. CMD_EXPECTED |
| FCT_NSUBS = NSUBS<br>(IFRC) | $N_S$ | .GE. CMD_EXPECTED<br>AND<br>.LT. REC_TOO_FAR |
| FCT-NSUBS = NSUBS<br>(SREC, HARC, REJC, REJR) | $N_S$ | .GE. CMD_EXPECTED<br>AND<br>.LE. REC_TOO_FAR |

In step 180, if the sequence number is detected as being out-of-range, an error is indicated and the system returns to step 150 of Fig. 7. If, on the other hand, the sequence numbers for the frame are in range, step 182 is executed to determine whether the sequence number includes a received sequence number, whether $N_R$ is an acknowledgment and, also, whether that received sequence number is greater than the lowest unacknowledged sequence number. If such is the case, step 184 is executed to slide the receive window and to determine whether the system can come out of "slow-down"; i.e., whether the system can place more frames on the link. Hereinafter, step 184 will be referred to as ACK__WIND step 184.

If, on the other hand, the answers to the inquiries in step 182 are "no", or after step 184 has been executed, the frame is checked in step 186 to determine whether it is an I frame command, a heart beat, a reject command, or a reject response. If it is not, the system returns to step 150 of Fig. 7; otherwise, step 188 is executed, hereinafter referred to as HART step 188. In this step, the sequence numbers of the current frame are compared to that for the next information frame expected. If they are not the same, a hole may be indicated in the series of frames being received. If a hole is detected, a selective reject command or a reject command is queued in the EXPRESS QUEUE 108, depending upon the size of the hole. After execution of HART step 188, the system returns to step 150 of Fig. 7.

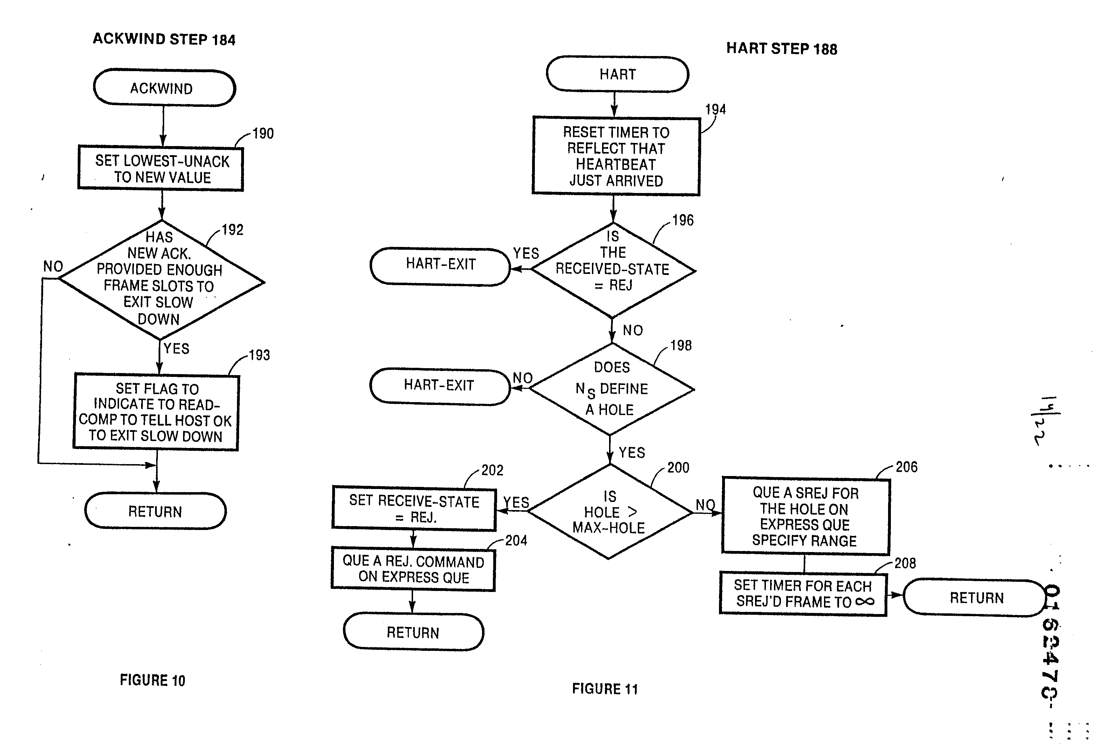

Referring more particularly to Fig. 10, ACK__WIND step 184 of Fig. 9 will now be described in greater detail. Recall that ACK__WIND step 184 slides the receive window and determines whether the system can come out of "slow-down". In step 190, because it has been determined that an acknowledgment has been received, the LOWEST__UNACK value in the receive window is set to the $N_R$ of the frame being processed. In step 192, a check is made to determine whether the new acknowledgment will permit the freeing-up of enough frame slots to permit the system to exit "slow-down". The exit "slow-down" value is one of the parameters agreed upon by the host computers at each end of the communications link during the link initialization sequence.

If, in step 192, it is determined that "slow-down" can be exited, step 193 is processed in which a flag is set to indicate to the system that the host can now be told to exit "slow-down".

If, in step 192, "slow-down" cannot be exited, the system returns to step 186 of Fig. 9.

Referring more particularly to Fig. 11, HART step 188 of Fig. 9 will now be described in greater detail. Recall that HART step 188 detects holes in the number sequence and queues selective reject or reject commands in the EXPRESS QUEUE 108, depending upon the detected hole size. More specifically, HART step 188 first resets the beattime timer in step 104 to reflect that a heartbeat, or some other communication from the remote station, has just arrived.

Step 196 is next executed to determine whether the system is in a receive state reject mode. If such is the case, the system exits from HART step 188. Recall that when the receive state is in the reject mode, only reject responses are to be processed by read processing function 42.

If, on the other hand in step 196, it is determined that a system is not in a receive state reject mode, step 198 is executed. Here, the send sequence number, $N_S$ is examined to determine whether a hole is indicated. A hole is indicated when the $N_S$ for the current frame being examined is greater than the command expected by read processing function 42. If no hole is defined, the system exits from HART step 188. If, on the other hand, a hole is found, step 200 is executed in which the size of the hole is examined to determine whether it is greater than the user-defined MAX__HOLE. If the hole is larger than MAX__HOLE step 202 is executed in which the system is set into a receive state reject mode. Thereafter, in step 204, read processing function 42 queues a reject command on the EXPRESS QUEUE 108. Thereafter, the system returns out of HART step 188.

If, on the other hand, in step 200, the quantity MAX__HOLE is not exceeded, selective reject commands, SREJC, are queued on the EXPRESS QUEUE 108 for all missing sequence numbers within the hole. This can be done by queueing selective reject commands for each of the missing sequence numbers or, preferably, by queueing a selective reject command which specifies a range of missing sequence numbers.

Upon completion of step 206, step 208 is executed in which a selective reject timer is set in the SRTA 110 for each of the selectively rejected frames. In the preferred embodiment of the present invention, the timer value is set to be infinity at this point. When the selective reject frame is actually transmitted by write processing function 26, the timer for each of the frames is set to the desired selective reject timer value. The timer value can be set by: TIME = SREJ_INTERVAL + (NO._SREJ_OUTSTANDING/FRAME_FACTOR) + CURRENT_TIME. FRAME_FACTOR is related to link speed.

After execution of step 208, the system exits out of HART step 188 in Fig. 9.

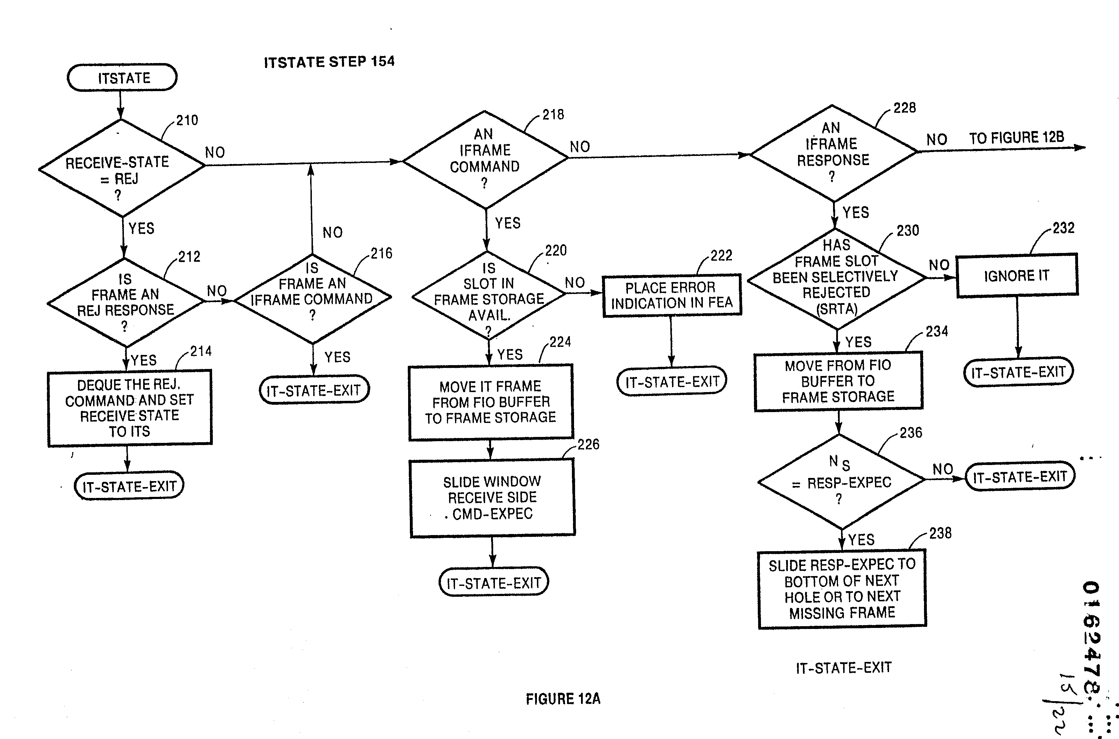

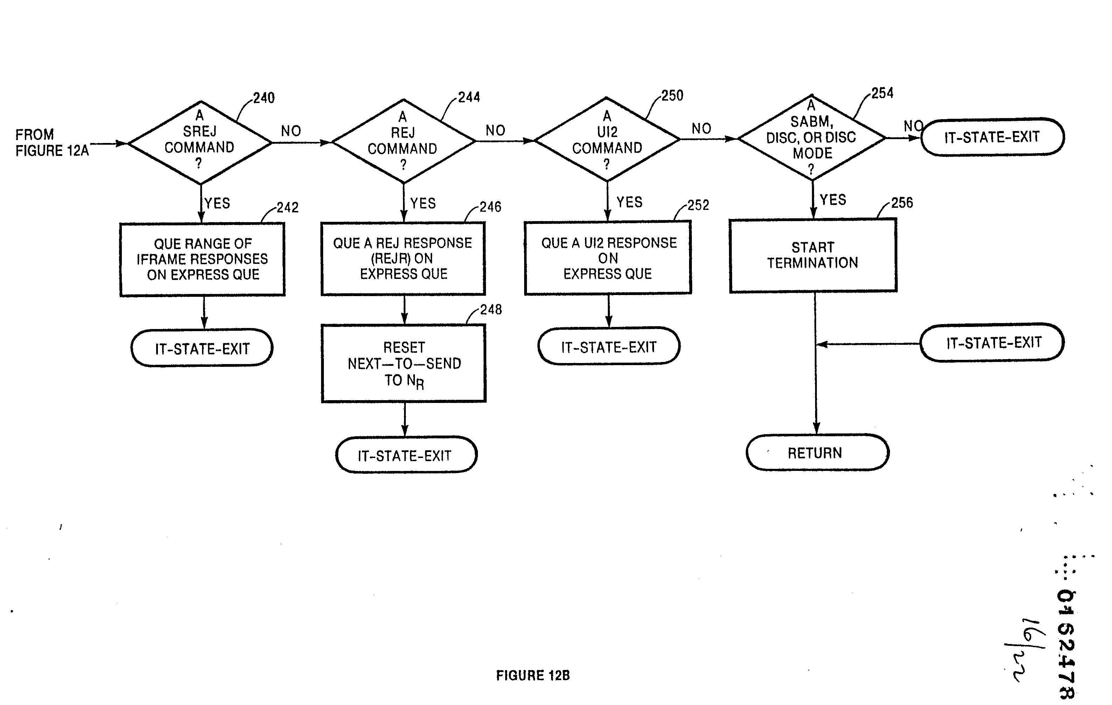

Recall that in Fig. 7, an ITSTATE step 154 is executed in which the information transfer state frames are processed. Referring now more particularly to Fig. 12, ITSTATE step 154 will now be described in greater detail. In step 210, the receive state of the data flow processor 20 is first examined to determine whether it is in the reject mode. As indicated above, when in the reject mode, no new I frame commands will be processed but all other frame types will be processed. If such is the case, step 212 is executed to determine whether the frame being processed is a reject response. If yes, the reject command that had previously been queued in the EXPRESS QUEUE for the sequence number of the current frame is dequeued, and the receive state of data flow processor 20 is set to an information transfer state, ITS, in step 214.

If, on the other hand, in step 212, the current frame is not a reject response, REJR, step 216 is processed to determine whether the frame is an I frame command.

In step 216, if it is determined that the frame is in I frame command, the system exits the ITSTATE step 154. This is because when the system is in the receive state reject mode, no new I frame commands will be processed but all other frame types will be processed. If, on the other hand, in step 216, it is determined that the frame is not in I frame command, the system continues processing the frame as if data flow processor 20 were not in a receive state reject mode.

In such case, step 218 is executed to determine whether the frame is an I frame command. Step 218 is executed when the result is negative in step 210 or in step 216. If the frame is not an I frame command, step 228 is executed to determine whether the frame is an I frame response.

If, instead, the frame is an I frame command, step 220 is executed to determine whether a slot is available in frame storage 106 for storing information from the current frame. If not, step 222 is executed to place an error indication in the frame element area 102 and thence to exit from the ITSTATE step 154.

If, on the other hand, space is available in frame storage 106, step 224 is processed to move the frame from the FIO buffer to the frame storage 106. Thereafter, in step 226, the receive window is updated. More specifically, the COMMAND_EXPECTED value is updated to a sequence number which is one greater than the sequence number $N_S$ for the frame just placed into frame storage 106. Thereafter, the read processing function 42 exits from ITSTATE step 154.

If the current frame is not an I frame command, step 218, and is an I frame response, step 228, the SRTA is examined to determine whether the frame slot, or sequence number has been rejected. See step 230. Recall that the SRTA 110 maintains a status flag for each of the frame in the frame sequence. Thus, the flag for the appropriate sequence number is examined to determine whether the flag indicates that the frame corresponding to that sequence number has been selectively rejected.

If the flag indicates that the frame has not been selectively rejected, step 232 is executed to ignore the frame. This condition can occur when the frame had originally been designated as selectively rejected, and the selective reject timer for the frame times out without receipt by read processing function 42 of an I frame response for that frame. Under such conditions, the selective reject command for that frame will be requeued in the EXPRESS QUEUE 108 and a selective reject command re-sent to the remote station. However, it is possible that, during this requeueing and re-sending of the selective reject command, an I frame response was, in fact, enroute over the communications link to the local station. This I frame response then will be received by the read processing function 42, the flag for the frame sequence number $N_S$ in the SRTA 110 will be changed to a received state, and the selective reject command will be dequeued from the EXPRESS QUEUE 108, all while the re-sent selective reject command is enroute to the remote station. If and when a duplicate I frame response is sent by the remote station, steps 230 and 232 will permit the read processing function 42 to ignore the frame.

If in step 230, it is determined that the frame has been selectively rejected, as specified by the corresponding flag in the SRTA 110, step 234 is executed to move the frame from the FIO buffer 100 to frame storage 106. Thereafter, in step 236, the send sequence number for the frame, $N_S$ is examined to determined whether it is equal to the response expected. If it is not equal, ITSTATE step 154 is exited. If $N_S$ is equal to RESP__EXPECTED, step 238 is executed to increment the value for RESP__EXPECTED to the bottom of the next hole or to the next missing frame of send sequence number $N_S$. Thereafter, ITSTATE step 154 is exited.

In step 228, if it is determined that the frame is not an I frame response, the frame is then examined to determine if it is a selective reject command. See step 240. Here, a selective reject command would be a communication from the remote station instructing the local station to retransmit certain frames. The selective reject command will specify, preferably, a range of selectively rejected send sequence numbers. In step 242, an I frame response command will be queued on EXPRESS QUEUE 108 and the range of send sequence numbers $N_S$ will be specified. Thereafter, the ITSTATE step 154 will be exited.

If in step 240, it is determined that the frame was not a selective reject command, step 244 is then executed to determine whether the frame represents a reject command. When a reject command is sent by the remote station, this indicates to the local station that all frames starting with and following the indicated receive sequence number $N_R$ are rejected, and that the local station should retransmit all frames starting with the indicated receive sequence number $N_R$. If such is the case, a reject response instruction will be queued on EXPRESS QUEUE 108 in step 246. Then, in step 248, the NEXT__TO__SEND is reset to correspond to the receive sequence number $N_R$ of the current frame. Thereafter, ITSTATE step 154 is exited.

If, in step 244, it is determined that the frame is not a reject command frame, step 250 is executed to determine whether the frame corresponds to an unnumbered initialization frame. An unnumbered initialization frame command can be present at this point where the remote station had previously sent an unnumbered initialization frame command but where the local station did not receive such command. If in step 250 the unnumbered initialization frame command is detected, step 252 is executed to queue an unnumbered response on EXPRESS QUEUE 108. Thereafter, ITSTATE step 154 is exited.

If, in step 250, the frame is not a unnumbered initialization frame command, step 254 is executed to determine whether the frame is a communications initiation type command (SABM), a disconnect command, or a disconnect mode command. If none of these commands are present, the ITSTATE step 154 is exited. If any one of the above three commands are detected, step 256 is executed to begin termination of the current link operation. A SABM command can be received at this point where the remote station had previously been shut down without the local station having detected it.

Detailed Write Processing Function 26:

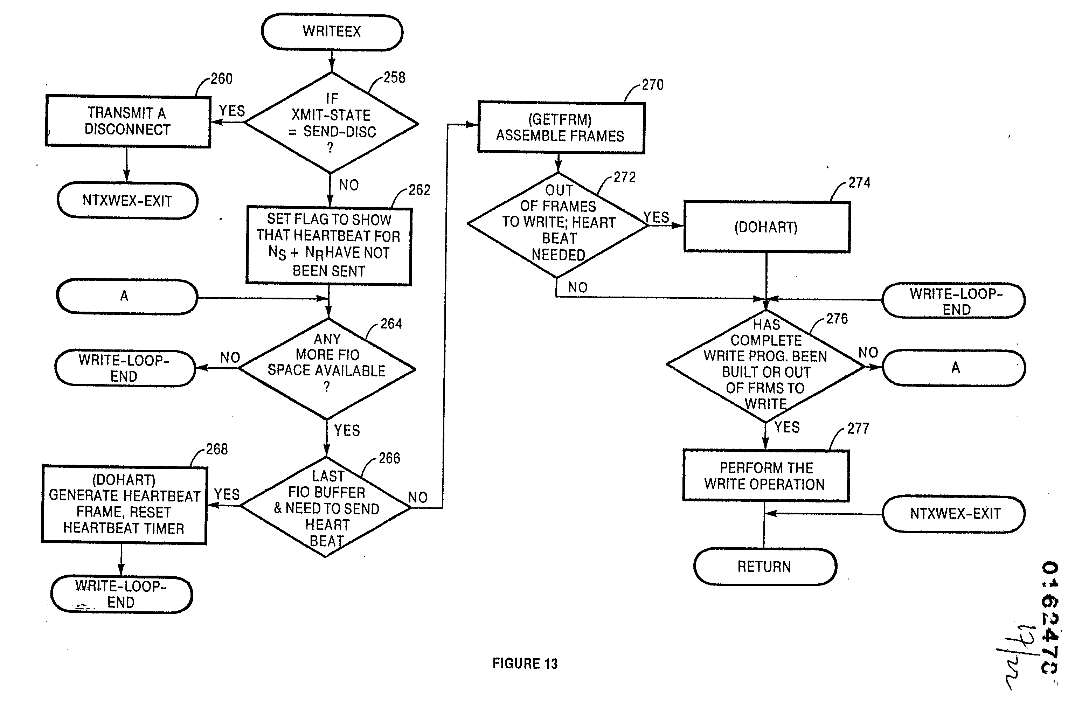

Referring now more particularly to Fig. 13, write processing function 26 will now be described in greater detail. Write processing function 26 is initiated whenever there are any instructions in EXPRESS QUEUE 108 to be processed or when there are any frames in frame storage 112 which can be sent. In step 258, Fig. 13, the transmit state for write processing function 26 is examined to determine whether it is in the send disconnect mode, SEND_DISC. If such is the case, step 260 is executed to cause frames to be sent to the remote station whereby the communications link can be terminated in an orderly fashion.

If, in step 258, the transmit state is not in the send disconnect mode, step 262 is processed to set the flags for the heartbeats for $N_R$ and $N_S$ to indicate that the heartbeats have not been sent. Thereafter, step 264 is executed to determine whether more frames can be written into FIO buffer 118. Each time this routine is invoked such space will be available in FIO buffer 118. During the normal operation of the data flow processor 20, frames for transmission are written into FIO buffer 118 until the buffer is full. Thereafter, step 276, at the bottom of Fig. 13, is executed to verify that the frames in FIO 118 are ready to be transmitted. In step 277, the FIO buffer 118 is accessed by communication processor 40 and the frames are placed on the communications link.

If, in step 264, more space is available in FIO buffer 118, step 266 is executed to determine whether only the last portion of FIO buffer 118 is remaining and whether a heartbeat is required to be sent. The heartbeat requirement can arise where the previous frames stored in FIO buffer 118 are selective reject frames or I frame responses or other types of frames which do not provide the current send and receive sequence numbers $N_S$ and $N_R$, respectively.

If a heartbeat is required and only the last portion of FIO buffer 118 remains, step 268 is executed wherein a heartbeat frame is generated and the heartbeat timer reset. Hereinafter, this step will be referred to as DOHART step 268.

If, on the other hand, the answer in step 266 is "no", step 270 is executed in which a frame is assembled in accordance with entries in the EXPRESS QUEUE 108, or if no such entries exist, from the information in frame storage 112. Step 270, hereinafter referred to as GETFRM 270, causes the assembly of the frames and the writing of the frames into FIO buffer 118.

In GETFRM step 270, a single frame is assembled for each execution of the step. Thus, in step 272, a check is made to determine whether the system is out of frames to write, or whether a heartbeat is needed. If the answer is "no", step 276 is executed to determine whether a complete write program has been built, or whether the system is out of frames to write.

Where, in step 272, a heartbeat is desired, a heartbeat frame is generated and the heartbeat timer is reset as in step 268.

If, in step 276, it is determined that there are additional frames to be written, or that a complete write program has yet to be built, write processing function 26 returns to step 264 to continue building frames.

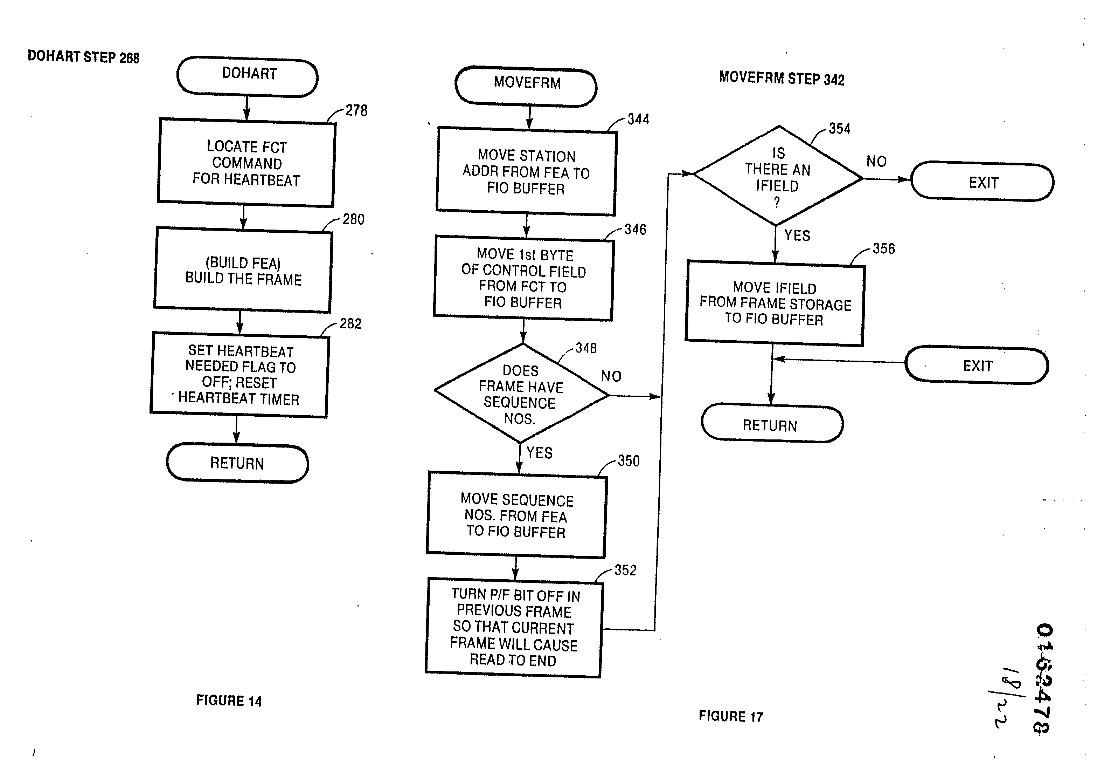

Referring more specifically to Fig. 14, DOHART step 268 and DOHART step 274 will be described in greater detail. In step 278, write processing function 26 accesses FCT·114 to obtain the command pattern for a heartbeat. This command pattern is then utilized in step 280 to build a heartbeat frame. Hereinafter, step 280 will be referred as BILDFEA step 280. After execution of BILDFEA step 280, step 282 is processed wherein the heartbeat needed flag is set to "off" and the heartbeat timer is reset. Upon completion of step 282, DOHART step 268 is exited.

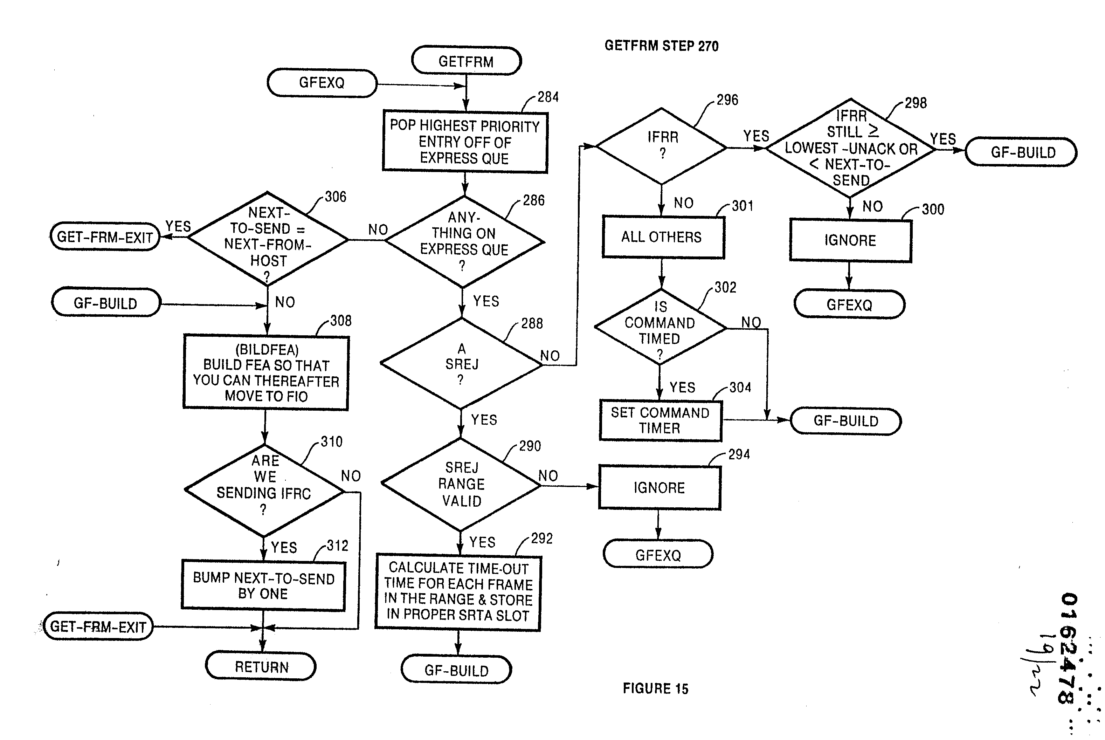

Referring more particularly to Fig. 15, GETFRM step 270 will now be described in greater detail. Recall that in GETFRM step 270, frames are assembled from information in frame storage 112, from commands retrieved from FCT 114, and from information stored in frame element area FEA 116.

In step 284, the EXPRESS QUEUE 108 is accessed for its highest priority entry. In step 286, it is determined whether or not the EXPRESS QUEUE had any instructions in it. If not, processing is begun on the information in frame storage 112, starting from step 306.

If, on the other hand, an instruction is present in EXPRESS QUEUE 108, a step 288 is executed to determined whether the instructions correspond to a selective reject command. If such is the case, step 290 is executed to determine whether the sequence number of the frame being rejected is valid. As was discussed earlier in connection with read processing function 42, a situation may arise where a selective reject command is sent to the remote station, and the remote station responds by retransmitting the frame. Where the selective reject timer in the local station expires before a receipt of the retransmitted frame, a second selective reject command will be sent. Thereafter, the response frame corresponding to the selectively rejected frame will be received by the local station and the selective reject flag removed from the particular sequence. Thereafter, the remote station will have responded to the second selective reject command and retransmitted the desired frame. In step 290, the system is checking to verify whether the selective reject command that has been queued on the EXPRESS QUEUE 108 really needs to be sent. If the flag corresponding to the sequence number in the SRTA indicates that a frame has successfully been received, step 294 will be executed to ignore the current instruction.

If, on the other hand, step 290 indicates that the selective reject sequence number is within a valid range, step 292 is executed to 1) calculate a timer value for each frame being selectively rejected, as where the range of frames is being selectively rejected, and 2) store the timer value in the corresponding slot of the SRTA 110. The timer value is that period in time after which read processing function 42 will requeue a selective reject command, where no corresponding I frame response is received. The timer value allows for link propagation time and response time. After execution of step 292, the system proceeds to step 308, wherein the frame is actually built.

If, in step 288, it is determined that the EXPRESS QUEUE instruction does not correspond to a selective reject command, step 296 is executed to determine whether an I frame response is being requested. Step 298 is executed whether the I frame response request corresponds to a sequence number greater than or equal to the lowest unacknowledged frame, LOWEST__UNACK, or less than the next frame to be sent, NEXT__TO__SEND. If the sequence number for the I frame responses is outside of the indicated range, step 300 is executed to ignore the current instruction. Thereafter, the system returns to step 284 to obtain the next instruction from the EXPRESS QUEUE 108.

If, in step 298, the sequence number for the I frame response is determined to be within range, the system proceeds to step 308 to build an I frame response.

If it is indicated that the instruction does not correspond to an I frame response, step 301 is executed to handle all of the other possible commands such as reject commands, SABM commands, and unnumbered initialization commands. Thereafter, step 302 is executed to determine whether the particular commands are to be timed. If so, step 304 is executed to set the command timer for the particular type of frame. Thereafter, or where in step 302 the command is not to be timed, the system proceeds to step 308 to build the actual frame.

Returning to step 286, when it is determined that there are no instructions from the EXPRESS QUEUE this indicates that information from the frame storage 112 is to be processed. Thus, step 306 is next executed to determine whether the NEXT__TO__SEND value in the send window is equal to the NEXT__FROM__HOST value. If so, this indicates that all of the frames provided by the host for transmission have been built and provided to FIO buffer 118. If the answer in step 306 is "yes", then GETFRM step 270 is executed. If, on the other hand, the answer in step 306 is "no", step 308 is executed to build the frame element area so that the frame can be moved to the FIO buffer 118. Hereinafter, step 308 will be referred to as BILDFEA step 308.

After BILDFEA 308 is completed, step 310 is executed to determine whether an I frame command is being sent by way of the frame that was just built. If "yes", step 312 is executed to increment the NEXT__TO__SEND value in the send window by one. If, in step 310, the answer is "no" or upon completion of step 312, the GETFRM step 270 is exited.

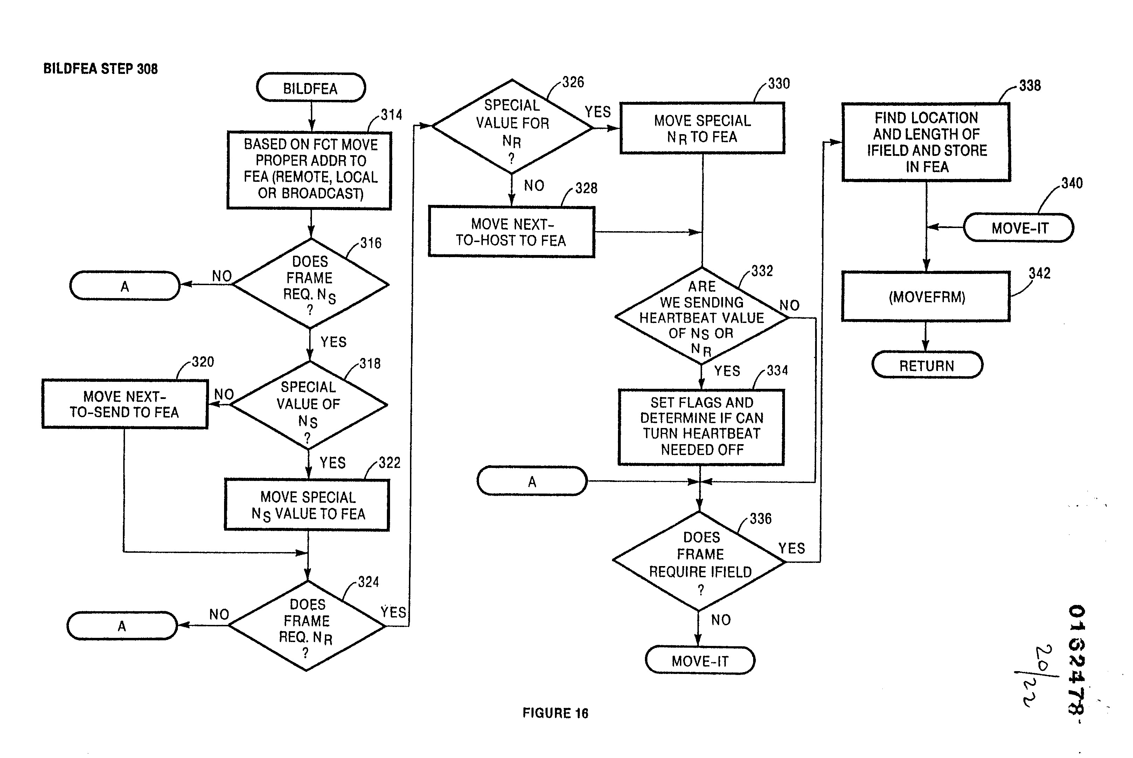

Referring more particularly to Fig. 16, BILDFEA step 308 will now be described in greater detail. Recall that BILDFEA step 308 performs the actual gathering of the various information required to assemble a frame.

In step 314, the FCT 114 is accessed to determine the proper address to be entered into the frame, by way of frame element area 116, for the type of frame sought to be sent. These addresses can be the address of the remote station for a command, the address of the local station for a response type frame, or all ones for a broadcast type frame. Thereafter, step 316 is executed to determine whether the frame requires a send sequence number, $N_S$. If not, processing is resumed at step 336 to determine whether the frame requires an information field.

If, on the other hand in step 316, it is determined that $N_S$ is required, step 318 is executed to determine whether a special value of $N_S$ is desired. For example, where a selective reject command is being sent, a high end of the range and a low end of the range for $N_S$ will be required. Similarly, where an I frame response is being sent, the value for $N_S$ will be the sequence number of the frame being sent.

Where a special value is required in step 318, the special value is moved to FEA 116 in step 322. If no special value is required, then the value for $N_S$ will be the next send value. This value will be moved to the FEA 116 in step 320.

Upon completion of step 320 or 322, step 324 is executed to determine whether a receive sequence number, $N_R$ is required. If so, step 326 is executed to determine whether a special value is desired. If the answer in step 324 is "no", then processing resumes at step 336.

If, in step 326, a special value for $N_R$ is indicated, the special value is moved into FEA 116 by step 330. If, on the other hand, a special value is not required for $N_R$, the NEXT_TO_HOST from the receive window is moved into FEA 116.

Upon completion of step 328 or step 330, step 332 is executed in which it is determined whether a heartbeat value for $N_S$ or $N_R$ is being sent. If such is the case, step 334 is executed to set the heartbeat sent flag and to determine whether the heartbeat needed flag can be turned off. In the latter case, this need arises when both of the current $N_S$ and $N_R$ are sent.

Thereafter, or where the answer in step 332 is "no", processing is resumed at step 336. In step 336, it is determined whether the frame requires an information field. If "yes", step 338 is executed in which the location and length of the I field is determined and this location and length is stored in FEA 116. Thereafter, or where in step 336 the answer is "no", the frame is moved into the FIO buffer 118 by way of steps 340 and 342. Hereafter, step 342 will be referred to as MOVEFRM step 342.

Referring more particularly to Fig. 17, MOVEFRM step 342 will now be described in greater detail.

In step 344, the station address is moved from the FEA 116 to the FIO buffer 118. In step 346, the first byte of the control field is moved from the frame control table 114 to the FIO buffer 118. In step 348, it is determined whether the frame has sequence numbers. If "yes", the sequence numbers are moved from the FEA 116 to the FIO buffer 118 in step 350. In step 352, the poll final bit, P/F, is turned off in the previous frame stored in the FIO. Where a poll final bit is turned on, this indicates to the communication processor 40 on the receiving end that the current read should end. Thus, where a new frame is being written into the FIO buffer, the new frame has the potential for being the last frame in the transmission. The poll final bit is thus turned on. The previous frame having been written initially with the poll final bit being on, thus should have its poll final bit turned off so that the next frame can be read.

Upon completion of step 352 or where the answer in step 348 is "no", step 354 is next executed to determine whether an I field is required. If "no", MOVEFRM is exited. If "yes", the I field is moved from frame storage 112 to the FIO buffer 118 in step 356. Thereafter, MOVEFRM step 342 is exited.

In the present invention, I frames are not timed. Instead, when message flow is low, a heartbeat is periodically sent by each of the stations in the form

0162478

of a supervisory frame which indicates a station active condition and provides current values of $N_S$ and $N_R$. The receiving station compares the $N_S$ to the value it has stored for COMMAND_EXPECTED. If the two are not equal, the receiving station concludes that the intervening frames were lost in transmission and updates its HOLE file accordingly. The interval at which the heart beat is sent in periods of low traffic is called HOST_IDLE_INTERVAL which is selected by the user.

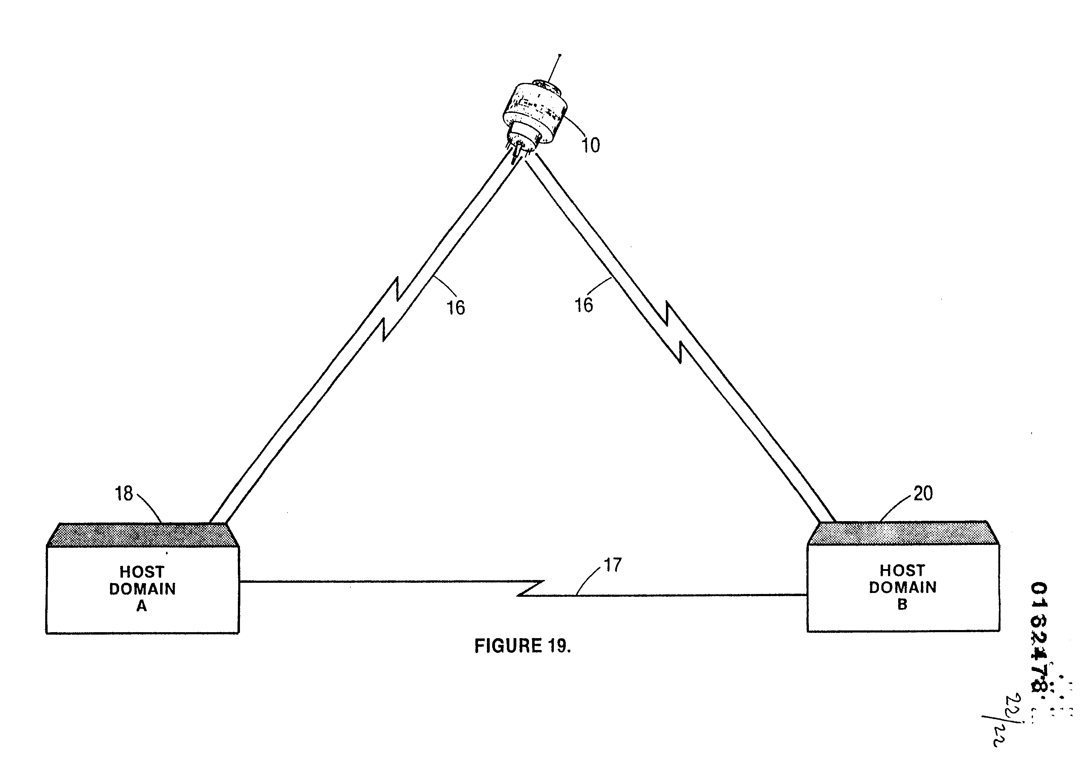

It is to be understood that the present invention is applicable to both bidirectional, high speed communications links, where the message frames and acknowledgment frames all travel on high speed links, and to an unbalanced or asymmetrical link where the message traffic flows over the high speed link and the acknowledgments travel over a lower speed or smaller bandwidth link. In either case, the sending station monitors the number of frames that it has transmitted and which are still outstanding, and the receiving station examines the frames received and sends back acknowledgments, multiple selective rejects, and block rejects. The asymmetrical arrangement is illustrated in Fig. 19. There, host A can be the high transmission traffic host which transmits over the satellite link 16. Host B receives the transmissions over satellite link 16 and provides acknowledgements over slower speed link 17. A such, a significant savings in link costs can be realized.

The terms and expressions which have been employed here are used as terms of description and not of limitations, and there is no intention, in the use of such terms and expressions of excluding equivalents of the features shown and described, or portions thereof, it being recognized that various modifications are possible within the scope of the invention claimed.

## Claims

1.  An improved satellite communications system of the type including first and second means for transmitting and receiving sequentially numbered frames of information, means for communicating said information between the first and second means, said first and second means each including means for evaluating the information received from the other and for transmitting status information to the other to indicate whether said information was successfully received, and each first and second transmitting and receiving means further including means responsive to the status information received from the other for controlling subsequent transmission of frames of information to the other, the improvement comprising

selective reject means coupled to the evaluating means for controlling the transmitting and receiving means to send a selective reject command to the other transmitting and receiving means which command identifies each frame which has not been successfully received from said other; and

response means responsive to the selective reject commands from the other transmitting and receiving means for controlling the transmitting and receiving means to retransmit the identified selectively rejected frames to said other, wherein a multiplicity of rejected frames can be identified for retransmission at any point in time.

2. The apparatus of claim 1 wherein at least one of said first and second transmitting and receiving means further comprise means for detecting the absence of ones of the frames in the sequence of sequentially numbered frames being received and including means for controlling the transmitting and receiving means to send a selective reject range command to the other transmitting and receiving means which selective reject range command specifies a range that defines the sequence numbers of the missing frames.

3. The apparatus of claim 1 wherein at least one of said first and second transmitting and receiving means further include

means for monitoring the receipt of a response frame from the other transmitting and receiving means which frame was transmitted in response to a selective reject command to the other; and

means for initiating a retransmission of the selective reject command to the other whenever the response frame is not received within a predetermined time period after the issuance of the selective reject command to the other.

4. The apparatus of Claim 1, wherein each frame of information transmitted by either the first or second transmitting and receiving means includes a send sequence number which identifies the frame of information being transmitted and a receive sequence number which acknowledges receipt of a frame of information from the other and identifies the sequence number of that received frame.

0162478

5.    The apparatus of Claim 1, wherein at least one of said first and second transmitting and receiving means are supplied by a data source with frames of information for transmission and supply received frames of information to a data sink and further include

first means coupled to one of the transmitting and receiving means for monitoring the status information received from the other transmitting and receiving means and the sequence numbers of the frames of information which are to be transmitted by the one transmitting and receiving means, and for inhibiting the further transmission of the frames by the one transmitting and receiving means whenever the difference in sequence numbers between the next frame to be transmitted by the one transmitting and receiving means and the last frame acknowledged as received by the other transmitting and receiving means exceeds a send sliding window quantity; and

second means for monitoring sequence numbers of the frames being received from the other transmitting and receiving means and the selectively rejected frames identified by the other transmitting and receiving means, and for inhibiting the receipt of further frames whenever the difference in sequence number between the next frame expected to be received from the other transmitting and receiving means and the earliest, unreceived selectively reject frame exceeds a receive sliding window quantity.

6.   The apparatus of Claim 4 further including means for restricting the received sequence number which can be transmitted to the other transmitting and receiving means to be less than the sequence number of the earliest selectively rejected frame which has yet to be received by the rejecting transmitting and receiving means which sent the selective reject command for that frame.

7.    The apparatus of Claim 5, wherein said each first and second monitoring and inhibiting means include

memory means for storing all frames which have been transmitted or are awaiting transmission and which lie between and including the lowest frame for which receipt has yet to be acknowledged by the other transmitting and receiving means and the last frame received from the host for transmission;

memory means for storing all frames between and including the last frame which is to be passed to the host and the last frame which has been received from the other transmitting and receiving means; and

means for determining an upper limit of the sequence number of a next frame which can be received from the host and the sequence number of a next frame expected from the other transmitting and receiving means which sequence numbers define the send sliding window quantity and the receive sliding window quantity respectively, so that each of said memory means maintains a sliding window over the sequentially numbered frames of information being exchanged between the first and second transmitting and receiving means.

8.    The apparatus of Claim 2 further including means for controlling the transmitting and receiving means to send a "Go_back_n" reject command to the other transmitting and receiving means whenever the size of the hole exceeds a predetermined number.

9. The apparatus of Claim 2 wherein the range defined in the selective reject range command is specified by a first sequence number designating the low end of the range and a second sequence number designating the high end of the range.

10. The apparatus of Claim 1 further including heartbeat means responsive to the frames being transmitted by one of the transmitting and receiving means for causing the transmission of a heartbeat frame when there is an absence of transmission of other frames by the one transmitting and receiving means.

11. The apparatus of Claim 10 wherein the heartbeat means include means for forming a frame which indicates that the one transmitting and receiving means is still active and provides current received and transmitted sequence number information.

12. The apparatus of Claim 11 wherein the frame forming means further forms frames which include information about frames sent and received by the one transmitting and receiving means.

13. The apparatus of Claim 2 wherein the controlling means include means for issuing a reject command for transmission to the other transmitting and receiving means whenever the absence of a sequence of frames is detected and the number of frames in the absent sequence exceeds as predetermined reject threshold.

14. The apparatus of Claim 7 wherein each host provides a perferred set of link parameters to its associated transmitting and receiving means which sets are a function of system resources available to the particular host, and further including initialization means coupled to each transmitting and receiving means for controlling the initialization of communication between the first and second transmitting and receiving means, the initialization means comprising

means for requesting communication with the other transmitting and receiving means;

means for exchanging the perferred sets of link parameters between the first and second transmitting and receiving means; and

means for generating a modified set of link parameters which represent a compromise between the preferred sets of link parameters and the system resources available to each host, wherein one of the parameters specified is the transmitting and receiving window size.

15. The apparatus of Claim 14 wherein the exchanging means include means for selecting one of the transmitting and receiving means to transmit its set of perferred link parameters to the other transmitting and receiving means, and further wherein the means for generating modified link parameters include

means responsive to the received set of perferred link parameters from the other transmitting and receiving means for resolving the received set of perferred link parameters with that of its associated host; and

means for transmitting a resolved set of link parameters to the other transmitting and receiving means.

16.  The apparatus of Claim 1 wherein the first transmitting and receiving means has a high level of information traffic and the second transmitting and receiving means has a low level of information traffic and futher wherein the communication means include a high speed link for communicating the sequentially numbered frames from the first transmitting and receiving means to the second transmitting and receiving means and a low speed link for communicating the sequentially numbered frames from the second transmitting and receiving means to the first transmitting and receiving means.

17.  A method for transmitting sequentially numbered frames of information over a satellite link between first and second transmitting and receiving means including in connection with one of the transmitting and receiving means the steps of

evaluating the information received from the other transmitting and receiving means;

transmitting status information to the other transmitting and receiving means to indicate whether said information was successfully received;

controlling subsequent transmission of frames of information from the other transmitting and receiving means by

controlling the one transmitting and receiving means to send a selective reject command to the other transmitting and receiving means which command identifies each frame which has not been successfully received from said other transmitting and receiving means; and

controlling the other transmitting and receiving means to retransmit the identified rejected frames to said one transmitting and receiving means, wherein a multiplicity of selectively rejected frames can be identified for retransmission at any point in time.

18. The method of Claim 17 futher include the steps of
detecting the absence of ones of the frames in the sequence of sequentially numbered frames being received by one of the transmitting and receiving means;
controlling the one transmitting and receiving means to send a selective reject range command to the other transmitting and receiving means which selective reject range command specifies a range that defines the sequence numbers of the missing frames.

19. The method of claim 17 further including the steps of
monitoring in one of the transmitting and receiving means the receipt of a response frame from the other transmitting and receiving means which frame was transmitted in response to a selective reject command to the other; and
initiating a retransmission of the selective reject command to the other whenever the response frame is not received within a predetermined time period after the issuance of the selective reject command to the other.

20. The method of Claim 17 wherein each frame of information transmitted by either the first or second transmitting and receiving means includes a send sequence number which identifies the frame of information being transmitted and a receive sequence number which acknowledges receipt of a frame of information from the other and identifies the sequence number of that received frame.

21. The method of Claim 17 wherein at least one of said first and second transmitting and receiving means are supplied by a host with frames of information for transmission and supply received frames of information to the host and further including the steps of

monitoring the status information received from the other transmitting and receiving means and the sequence numbers of the frames of information which are to be transmitted by the one transmitting and receiving means;

inhibiting the further transmission of the frames by the one transmitting and receiving means whenever the difference in sequence numbers between the next frame to be transmitted by the one transmitting and receiving means and the last frame acknowledged as received by the other transmitting and receiving means exceeds a send sliding window quantity;

monitoring sequence numbers of the frames being received from the other transmitting and receiving means and the selectively rejected frames identified by the other transmitting and receiving means; and

inhibiting the receipt of further frames whenever the difference in sequence number between the next frame expected to be received from the other transmitting and receiving means and the earliest, unreceived selectively reject frame exceeds a receive sliding window quantity.

22. The method of Claim 20 further including the step of

restricting the received sequence number which can be transmitted to the other transmitting and receiving means to be less than the sequence number of the earliest selectively rejected frame which has yet to be received by the rejecting transmitting and receiving means which sent the selective reject command for that frame.

23. The method of Claim 21 further including the steps of

storing in a memory means all frames which have been transmitted or are awaiting transmission and which lie between and including the lowest frame, for which receipt has yet to be acknowledged by the other transmitting and receiving means, and the last frame received from the host for transmission;

storing in the memory means all frames between and including the last frame which is to be passed to the host and the last frame which has been received from the other transmitting and receiving means; and

determining an upper limit of the sequence number of a next frame which can be received from the host and the sequence number of a next frame expected from the other transmitting and receiving means which sequence numbers define the send sliding window quantity and the receive sliding window quantity respectively, so that said memory means maintains a sliding window over the sequentially numbered frames of information being exchanged between the first and second transmitting and receiving means.

24. The method of Claim 18 further including the step of

controlling the transmitting and receiving means to send a "Go_back_n" reject command to the other transmitting and receiving means whenever the size of the hole exceeds a predetermined number.

25. The apparatus of Claim 18 wherein the range defined in the selective reject range command is specified by the steps of

designating a first sequence number for the low end of the range; and

designating a second sequence number for the high end of the range.

26. The method of Claim 17 further including the step of

causing the transmission of a heartbeat frame when there is an absence of transmission of other frames by the one transmitting and receiving means.

27. The methodof Claim 26 wherein the heartbeat transmitting step includes the step of

forming a frame which indicates that the one transmitting and receiving means is ready to receive frames.

28. The method of Claim 27 wherein the frame forming step includes the step of

forming frames which include information about frames sent and received by the one transmitting and receiving means.

29. The method of Claim 18 wherein the controlling step includes the step of

issuing a reject command for transmission to the other transmitting and receiving means whenever the absence of a sequence of frames is detected and the number of frames in the absent sequence exceeds as predetermined reject threshold.

30. The method of Claim 23 wherein each host provides a perferred set of link parameters to its associated transmitting and receiving means which sets are a function of system resources available to the particular host, and further including the steps of

controlling the initialization of communication between the first and second transmitting and receiving means by

requesting communication with the other transmitting and receiving means;

exchanging the perferred sets of link parameters between the first and second transmitting and receiving means; and

generating a modified set of link parameters which represent a compromise between the preferred sets of link parameters and the system resources available to each host.

31. The apparatus of claim 14 wherein further parameter values specified include timing values by which retransmission of selective reject commands can be automatically initiated.

FIGURE 1.

18 HOST COMPUTER 22 12 14 24 HOST COMPUTER 20

FIGURE 2A.

FIGURE 2B. $10^{-7}$ ERROR RATE

FIGURE 2C. $10^{-4}$ ERROR RATE

FIGURE 3A.

FIGURE 3B.

FIGURE 3C.

M203 M202 10

M202 M203

16 16

M270 M135

M135 M270

NEW YORK HOST COMPUTER 18

LOS ANGELES HOST COMPUTER 20

FIGURE 4.

STATION 18
(SEND SIDE)

| SEQ. NO. | $t_0$ | $t_1$ | $t_2$ |
|---|---|---|---|

0
•
•
•

45    LOWEST–UNACK
46                              LOWEST–UNACK
47
48
49                                                            LOWEST–UNACK
50
51    NEXT–TO–SEND
52
53
54                              NEXT–TO–SEND                   NEXT–TO–SEND
55    NEXT–FROM–HOST            NEXT–FROM–HOST                 NEXT–FROM–HOST
•
•
•
171
172
173
174   TOO–FAR
175                             TOO–FAR
176
177
178                                                            TOO–FAR
179
180
•
•
•
255

WINDOW ($t_0$)  WINDOW ($t_1$)  WINDOW ($t_2$)

FIGURE 5A.

| SEQ. NO. | $t_0$ | $t_1$ | $t_2$ |
|---|---|---|---|
| 0 | | | |
| • | | | |
| • | | | |
| • | | | |
| 45 | | | |
| 46 | NEXT-TO-HOST | | |
| 47 | | NEXT-TO-HOST | |
| 48 | HOLE-RESPONSE- EXPEC. | | |
| 49 | HOLE | HOLE-RESPONSE- EXPEC. | |
| 50 | | | NEXT-TO-HOST |
| 51 | COMMAND-EXPECTED | HOLE | HOLE-RESPONSE- EXPEC. |
| 52 | | HOLE | HOLE |
| 53 | | | |
| 54 | | COMMAND-EXPECTED | COMMAND-EXPECTED |
| 55 | | | |
| • | | | |
| • | | | |
| • | | | |
| 171 | | | |
| 172 | | | |
| 173 | | | |
| 174 | TOO-FAR | | |
| 175 | | TOO-FAR | |
| 176 | | | |
| 177 | | | |
| 178 | | | TOO-FAR |
| 179 | | | |
| 180 | | | |
| • | | | |
| • | | | |
| • | | | |
| 255 | | | |

WINDOW ($t_0$)    WINDOW ($t_1$)    WINDOW ($t_2$)

**FIGURE 5B.**

A READ BY
COMMUN. PROC.
HAS BEEN COMPLETED — 120

↓

SAVE OP SYS
DETECTED HARDWARE
STATUS FOR
THIS READ — 122

↓

EXAMINE STATUS;
SET FLAG IF
THERE WAS
AN ERROR — 124

↓

DID
READ OPERAT.
END WITH
ERROR
? — 126  — YES → READ-COMP-END

NO ↓

(FRMARRI)
EXECUTE PROTOCOL
PROCESSING AND
OTHER FUNCTIONS — 128

↓ ← READ-COMP-END

DID
THIS READ
PULL US OUT OF
SLOWDOWN OR
FRAMES FOR
HOST ? — 130  — NO → READ-COMP-EXIT

YES ↓

TELL HOST
WE HAVE DATA
FOR IT — 132

↓ ← READ-COMP-EXIT — 134

RETURN — 136

FIGURE 6.

**FRMARRI STEP 128**

FIGURE 7.

**FIGURE 8.**

**FIGURE 9.**

**ACKWIND STEP 184**

```
      ( ACKWIND )
           │
           ▼
   ┌─────────────────┐  ─190
   │ SET LOWEST-UNACK │
   │   TO NEW VALUE   │
   └─────────────────┘
           │
           ▼
        ╱ HAS ╲  ─192
       ╱ NEW ACK. ╲
  NO  ╱ PROVIDED ENOUGH ╲
 ◄───╱ FRAME SLOTS TO ╲
      ╲ EXIT SLOW ╱
       ╲ DOWN ╱
           │ YES
           ▼           ─193
   ┌─────────────────┐
   │   SET FLAG TO    │
   │ INDICATE TO READ-│
   │COMP TO TELL HOST OK│
   │ TO EXIT SLOW DOWN │
   └─────────────────┘
           │
           ▼
       ( RETURN )
```

FIGURE 10

**HART STEP 188**

```
         ( HART )
            │
            ▼
   ┌─────────────────┐ ─194
   │  RESET TIMER TO  │
   │  REFLECT THAT    │
   │   HEARTBEAT      │
   │  JUST ARRIVED    │
   └─────────────────┘
            │
            ▼          ─196
              ╱ IS ╲
  YES        ╱ THE ╲
( HART-EXIT )◄─── RECEIVED-STATE
              ╲ = REJ ╱
            NO │
               ▼      ─198
              ╱ DOES ╲
  NO         ╱  N_S DEFINE ╲
( HART-EXIT )◄─── A HOLE
               ╲    ╱
            YES │
                ▼
                        ─200
 ┌──────────┐ YES  ╱ IS ╲  NO   ┌──────────────┐ ─206
 │SET RECEIVE│◄───╱ HOLE > ╲───►│ QUE A SREJ FOR │
 │-STATE    │     ╲ MAX-HOLE╱    │  THE HOLE ON   │
 │= REJ.    │─202   ╲    ╱       │  EXPRESS QUE   │
 └──────────┘                    │ SPECIFY RANGE  │
      │                          └──────────────┘
      ▼      ─204                        │ ─208
 ┌──────────┐                   ┌──────────────┐
 │QUE A REJ. │                   │SET TIMER FOR EACH│──►( RETURN )
 │COMMAND   │                   │SREJ'D FRAME TO ∞ │
 │ON EXPRESS QUE│                └──────────────┘
 └──────────┘
      │
      ▼
  ( RETURN )
```

FIGURE 11

ITSTATE STEP 154

FIGURE 12A

FIGURE 12B

FIGURE 13

DOHART STEP 268

**DOHART**

LOCATE FCT
COMMAND
FOR HEARTBEAT
— 278

(BUILD FEA)
BUILD THE FRAME
— 280

SET HEARTBEAT
NEEDED FLAG TO
OFF; RESET
HEARTBEAT TIMER
— 282

RETURN

**FIGURE 14**

---

**MOVEFRM**

MOVE STATION
ADDR FROM FEA TO
FIO BUFFER
— 344

MOVE 1st BYTE
OF CONTROL FIELD
FROM FCT TO
FIO BUFFER
— 346

DOES
FRAME HAVE
SEQUENCE
NOS.
— 348 → NO

YES

MOVE SEQUENCE
NOS. FROM FEA
TO FIO BUFFER
— 350

TURN P/F BIT OFF IN
PREVIOUS FRAME
SO THAT CURRENT
FRAME WILL CAUSE
READ TO END
— 352

---

MOVEFRM STEP 342

IS
THERE AN
IFIELD
?
— 354 → NO → EXIT

YES

MOVE IFIELD
FROM FRAME STORAGE
TO FIO BUFFER
— 356

EXIT

RETURN

**FIGURE 17**

0162478

GETFRM STEP 270

FIGURE 15

**BILDFEA STEP 308**

FIGURE 16

FLAG | ADDR | CONTROL | INFORMATION | FRAME CHECK SEQ. | FLAG

28 30 32 34 36 38

8 | 8 | 8-72 | 0-n | 16 | 8

**I-TYPE (INFORMATION)**

| 0 | X | X | X | P/F | SEQUENCE LENGTH | N(S) | N(R) |

44

4-32 | 4-32

SEQ. # OF FRAME BEING SENT

SEQ. # + 1 OF ALL FRAMES RECEIVED

50

| MESSAGE FLAG | MESSAGE LENGTH | INFORM. | MESSAGE FLAG (MULTIPLE MESSAGE FRM) | MESSAGE FLAG (MULTIPLE MESSAGE FRAME) | INFORM. |

54 (8 | 16) — 56

1 0 X . . . X   1ST SEG. OF MULTIPLE FR. PIU
0 0 X . . . X   MIDDLE SEG. OF MULTIPLE FR. PIU
0 1 X . . . X   END SEG. OF MULTIPLE FR. PIU
1 1 X . . . X   ENTIRE PIU
X X 1 X . . X   LAST PIU IN THIS FRAME

**S-TYPE (SUPERVISORY)**

| 1 | 0 | *S | S | P/F | SEQUENCE LENGTH | N(S) | N(R) | NOT USED |

46

4-32 | 4-32

0 0  HEARTBEAT   NEXT FRAME TO BE SENT   SEQ. NO. + 1 OF LAST FRM. RECEIVED + PASSED TO HOST

0 1  REJECT   NEXT FRAME TO BE SENT   STARTING # OF REJECTED SEQUENCE

1 1  SELECTIVE REJECT   HIGH END OF SREJ RANGE   LOW END OF SREJ RANGE

**U-TYPE (UNNUMBERED)**

| 1 | 1 | M | M | P/F | M | M | M |

48

| MESSAGE FLAG | MESSAGE LENGTH |

52

0 0   0 0 0   UNNUMBERED INFORM.
0 0   0 1 0   DISCONNECT
0 0   1 1 0   UNNUMBERED ACK.
0 1   0 0 0   SET ASYNC. BAL. MODE EXTEN.
1 0   0 0 1   FRAME IN ERROR
1 1   0 0 0   DISCONNECT MODE

X = NOT USED
P/F = POLL/FINAL—INDICATES THAT ONE OR MORE MESSAGES HAVE BEEN SENT
*1, 0 NOT USED

**FIGURE 18.**

016247B

21/2

FIGURE 19.